# EUROPEAN PATENT APPLICATION

(11) **EP 2 451 165 A1**
(43) Date of publication of application: **09.05.2012**
(21) Application number: 10794021.5
(22) Date of filing: 22.06.2010
(51) Int. Cl.: H04N 13/00, H04N 7/173, H04N 7/26

(54) **THREE-DIMENSIONAL IMAGE DATA TRANSMISSION DEVICE, THREE-DIMENSIONAL IMAGE DATA TRANSMISSION METHOD, THREE-DIMENSIONAL IMAGE DATA RECEPTION DEVICE, THREE-DIMENSIONAL IMAGE DATA RECEPTION METHOD, IMAGE DATA TRANSMISSION DEVICE, AND IMAGE DATA RECEPTION DEVICE**

(30) Priority: 29.06.2009 JP 2009153686
(71) Applicant: Sony Corporation, Tokyo 108-0075 (JP)
(72) Inventor: TSUKAGOSHI, Ikuo, Tokyo 108-0075 (JP)
(74) Representative: Thévenet, Jean-Bruno
(86) International application number: PCT/JP2010/060579
(87) International publication number: WO 2011/001851

(57) **Abstract**

[object] To maintain consistency of perspective with each object in an image in the display of overlay information.

[Solution] A video framing unit 112 manipulates left eye image data and right eye image data into a state according to the transmission mode, thereby obtaining stereoscopic image data for transmission. On the basis of the left eye image data and the right eye image data, at a predetermined position within an image, a view vector detecting unit 114 detects a view vector that is disparity information of one of a left eye image and a right eye image with respect to the other. A view vector encoder 115 generates an elementary stream of view vector. By a multiplexer 122, bit stream data into which the view vector stream is multiplexed in addition to a video stream, an audio stream, a graphics stream, and the like, is generated and transmitted. At the receiving side, as the same overlay information to be overlaid on the left eye image and the right eye image, overlay information to which disparity adjustment has been applied in accordance with the perspective of each object within the image can be used.

## Description

### Technical Field

This invention relates to a stereoscopic image data transmitting apparatus, a stereoscopic image data transmitting method, a stereoscopic image data receiving apparatus, a stereoscopic image data receiving method, an image data transmitting apparatus, and an image data receiving apparatus, in particular, a stereoscopic image data transmitting method or the like which can perform display of overlay information such as graphics information and text information in a favorable manner.

### Background Art

For example, in PTL 1, a transmission mode for stereoscopic image data using television broadcast radio waves is proposed. In this case, stereoscopic image data including left eye image data and right eye image data is transmitted, and stereoscopic image display using binocular disparity/parallax is performed at a television receiver.

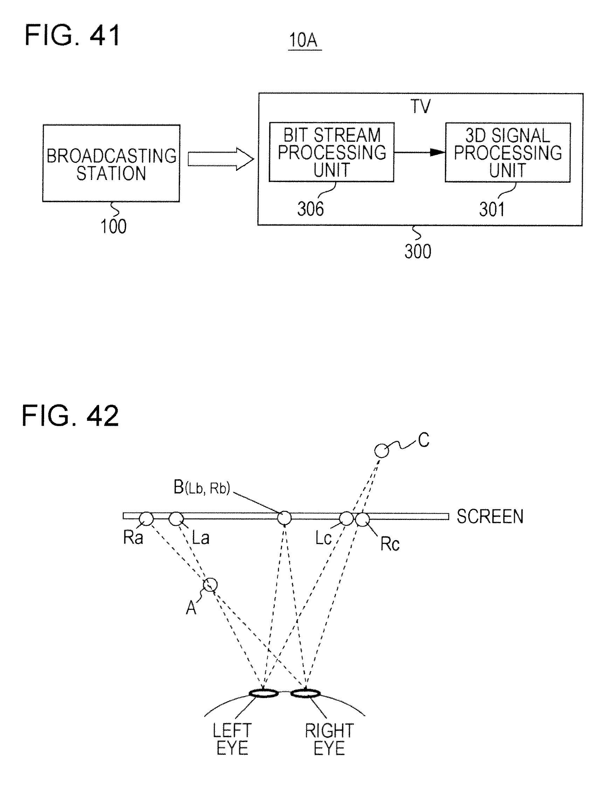

Fig. 42 illustrates the relationship between the display positions of the left and right images of objects on a screen, and the reconstructed positions of the resulting stereoscopic images, in stereoscopic image display using binocular disparity. For example, for object A whose left image La and right image Ra are displayed so as to be shifted the right side and to the left side, respectively, on the screen as illustrated in the drawing, the left and right lines of sight cross in front of the screen plane, so the resulting stereoscopic image is reconstructed at a position in front of the screen plane.

Also, for example, for object B whose left image Lb and right image Rb are displayed at the same position on the screen as illustrated in the drawing, the left and right lines of sight cross on the screen plane, so the resulting stereoscopic image is reconstructed at a position on the screen plane, Further, for example, for abject C whose left image Lc and right image Rc are displayed so as to be shifted the left side and to the right side, respectively, on the screen as illustrated in the drawing, the left and right lines of sight cross behind the screen plane, so the resulting stereoscopic image is reconstructed at a position behind the screen plane.

### Citation List

### Patent Literature

PTL 1: Japanese Unexamined Patent Application Publication No. 2005-6114

### Summary of Invention

### Technical Problem

As described above, in stereoscopic image display, it is common for the viewer to perceive the perspective of a stereoscopic image by using binocular disparity. As for overlay information to be overlaid on an image, for example, graphics information, text information, and the like as well, it is expected that the overlay information be rendered in conjunction with the stereoscopic image display, not only in two-dimensional spatial form but also for three-dimensional illusion of depth.

For example, when performing an overlay display of a caption as graphics information on an image, unless the caption is displayed in front of the object within the image which is nearest in perspective, the viewer sometimes feels inconsistency of perspective. Also, when performing an overlay display of another graphics information, or text information on an image as well, it is expected that disparity adjustment be applied in accordance with the perspective of each object within the image to thereby maintain consistency of perspective.

An object of this invention is to maintain consistency of perspective with each object within an image, in the display of overlay information such as graphics information and text information.

### Solution to Problem

A concept of this invention resides in a stereoscopic image data transmitting apparatus, including::
a stereoscopic image data outputting unit that outputs stereoscopic image data including left eye image data and right eye image data;
a disparity information outputting unit that outputs disparity information for giving a disparity by shifting overlay information to be overlaid on images based on the left eye image data and the right eye image data; and
a data transmitting unit that transmits the disparity information outputted from the disparity information outputting unit, together with the stereoscopic image data outputted from the stereoscopic image data outputting unit.

Also, another concept of this invention resides in a stereoscopic image data transmitting method, including:
acquiring disparity information for giving a disparity by shifting overlay information to be overlaid on images based on left eye image data and right eye image data; and
transmitting the acquired disparity information, together with stereoscopic image data including the left eye image data and the right eye image data.

Also, another concept of this invention resides in a stereoscopic image data transmitting method, including:
acquiring, on the basis of left eye image data and right eye image data for displaying a stereoscopic image, disparity information of one of a left eye image and a right eye image with respect to the other, at a predetermined position within an image; and
transmitting the acquired disparity information, together with stereoscopic image data including the left eye image data and the right eye image data.

In this invention, stereoscopic image data including left eye image data and right eye image data is outputted by the stereoscopic image data outputting unit. Also, disparity information for giving a disparity by shifting overlay information to be overlaid on images based on the left eye image data and the right eye image data is outputted by the disparity information outputting unit. For example, the disparity information is disparity information of one of a left eye image and a right eye image with respect to the other, and is calculated on the basis of the left eye image data and the right eye image data for displaying a stereoscopic image. In this case, at a predetermined position within an image, a view vector is calculated as the disparity information by the block matching method, for example. Then, the disparity information is transmitted by the data transmitting unit, together with the stereoscopic image data including the left eye image data and the right eye image data,

For example, the disparity information is transmitted as numeric information. In this case, at the receiving side, on the basis of this numeric information, a disparity is given to the same overlay information to be overlaid on the left eye image and the right eye image. Here, overlay information means information to be overlay-displayed on an image, such as graphics information for displaying a caption, or text information for displaying Electronic Program Guide (EPG) or teletext information. Also, the disparity information is transmitted while being included in the data of the overlay information to be overlaid on the images based on the left eye image data and the right eye image data. In this case, at the receiving side, this overlay information is used as it is.

In this way, the disparity information acquired at a predetermined position within an image is transmitted together with the stereoscopic image data including the left eye image data and the right eye image data. Thus, at the receiving side, as the same overlay information to be overlaid on the left eye image and the right eye image, overlay information to which disparity adjustment has been applied in accordance with the perspective of each object within the image can be used, thereby making it possible to maintain consistency of perspective in the display of the overlay information.

Also, a concept of this invention resides in a stereoscopic image data receiving apparatus, including:
an image data receiving unit that receives stereoscopic image data including left eye image data and right eye image data; and
an image data processing unit that gives a disparity to the same overlay information to be overlaid on a left eye image and a right eye image, on the basis of disparity information of one of the left eye image and the right eye image with respect to the other, and obtains data of the left eye image on which the overlay information has been overlaid and data of the right eye image on which the overlay information has been overlaid, the disparity information being obtained by processing the left eye image data and the right eye image data included in the stereoscopic image data received by the image data receiving unit.

In this invention, stereoscopic image data including left eye image data and right eye image data is received by the image data receiving unit. Also, on the basis of disparity information of one of a left eye image and a right eye image with respect so the other, a disparity is given to the same overlay information to be overlaid on the left eye image and the right eye image, by the image data processing unit. This disparity information is obtained by processing the left eye image data and the right eye image data included in the stereoscopic image data received by the image data receiving unit.

For example, the disparity information is received by a disparity information receiving unit in synchronization with the stereoscopic image data received by the image data receiving unit. In this case, it is not necessary to obtain the disparity information on the basis of the left eye image data and the right eye image data inducted in the stereoscopic image data received by the image data receiving unit, and thus processing at the receiving side is simplified. Also, for example, the disparity information is obtained by a disparity information acquiring unit. In this disparity information acquiring unit, on the basis of the left eye image data and the right eye image data included in the stereoscopic image data received by the image data receiving unit, the disparity information of one of the left eye image and the right eye image with respect to the other is obtained at a predetermined position within an image. In this case, processing using disparity information becomes possible even if the disparity information is not sent.

Also, the data of the left eye image on which the overlay information has been overlaid, and the data of the right eye image on which the overlay information has been overlaid are obtained by the image data processing unit. For example, stereoscopic image data including the left eye image data and the right eye image data obtained by the image data processing unit is transmitted to an external device by an image data transmitting unit. Also, for example, by an image display unit. An image for stereoscopic image display based on the left eye image data and the right eye image data obtained by the image data processing unit is displayed.

In this way, on the basis of the disparity information of one of the left eye image and the right eye image with respect to the other, a disparity is given to the same overlay information to be overlaid on the left eye image and the right eye image. Therefore, as the same overlay information to be overlaid on the left eye image and the right eye image, overlay information to which disparity adjustment has been applied in accordance with the perspective of each object within an image can be used, thereby making it possible to maintain consistency of perspective in the display of the overlay information.

It should be noted that in this invention, for example, the image data processing unit may give, to the same overlay information to be overlaid on the left eye image and the right eye image, the disparity according to the overlay position of this overlay information. In this case, since the disparity according to the overlay position is given to ach overlay information, for example, it is possible to impart the overlay information with a perspective equivalent to the perspective of an object present at the overlay position.

Also, in this invention, for example, there may be further provided a multichannel speaker, and a control unit that controls an output of the multichannel speaker on the basis of the disparity information of one of the left eye image data and the right eye image data with respect to the other. In this case, the stereo effect can be made even more pronounced.

### Advantageous Effects of Invention

According to this invention, at the receiving side of stereoscopic image data, as the same overlay information to be overlaid on the left eye image and the right eye image, overlay information to which disparity adjustment has been applied in accordance with the perspective of each object within an image can be used, thereby making it possible to maintain consistency of perspective in the display of the overlay information. Brief Description of Drawings

[Fig. 1] Fig. 1 is a block diagram illustrating an example of the configuration of a stereoscopic image display system as an embodiment of this invention.
[Fig. 2] Fig. 2 is a block diagram illustrating an example of the configuration of a transmit data generating unit in a broadcasting station.
[Fig. 3] Fig. 3 is a diagram illustrating image data in a 1920 x 1080p pixel format.
[Fig. 4] Fig. 4 is a diagram for explaining a "Top & Bottom" mode, a "Side by Side" mode, and a "Frame Sequential" mode that are transmission modes for stereoscopic image data (3D image data).
[Fig. 5] Fig. 5 is a diagram for explaining an example of detection of the view vector of a right eye image with respect to a left eye image.
[Fig. 6] Fig. 6 is a diagram for explaining that a view vector is calculated in a block matching mode.
[Fig. 7] Fig. 7 is a diagram illustrating an example of view vector VV at a predetermined position within an image, which is detected by a view vector detecting unit.
[Fig. 8] Fig. 8 is a diagram illustrating transmission information about view vector.
[Fig. 9] Fig. 9 is a diagram illustrating an example of disparity detection blocks, and transmission information about view vector in that ease.
[fig. 10] Fig. 10 is a diagram for explaining an example of timing of detecting and transmitting a view vector.
[Fig. 11] Fig. 11 is a diagram for explaining an example of timing of detecting and transmitting a view vector.
[Fig. 12] Fig. 12 is a diagram illustrating an example of data streams multiplexed in a transmit data generating unit.
[Fig. 13] Fig. 13 is a block diagram illustrating another example of the configuration of a transmit data generating unit in a broadcasting station.
[Fig. 14] Fig. 14 is a diagram for explaining the overlay positions of left eye graphics information and right eye graphics information, and the like in the case in which the transmission mode is the first transmission mode ("Top & Bottom" mode).
[Fig. 15] Fig. 15 is a diagram for explaining a method of generating left eye graphics information and right eye graphics information in the case in which the transmission mode is the first transmission mode ("Top & Bottom" mode).
[Fig. 16] Fig. 16 is a diagram for explaining a method of generating left eye graphics information and right eye graphics information in the case in which the transmission mode is the second transmission mode ("Side By Side" mode).
[Fig. 17] Fig. 17 is a diagram for explaining a method of generating left eye graphics information and right eye graphics information in the case in which the transmission mode is the second transmission mode ("Side By Side" mode).
[Fig. 18] Fig. 18 is a block diagram illustrating another example of the configuration of a transmit data generating unit in a broadcasting station.
[Fig. 19] Fig. 19 is a diagram illustrating the overlay positions of left eye graphics information and right eye graphics information in the case in which the transmission mode is the second transmission mode ("Side By Side" mode).
[Fig. 20] Fig. 20 is a diagram illustrating a state in which a graphics image based on graphics data extracted from bit stream data and transmitted by the method according to the related art is overlaid on each of a left eye image and a right eye image as it is.
[Fig. 21] Fig. 21 is a diagram illustrating view vectors at three object positions at times T0, T1, T2, and T3.
[Fig. 22] Fig. 22 is a diagram illustrating an example of display of a caption (graphics information) on an image, and the perspective of the background, a foreground object, and the caption.
[Fig. 23] Fig. 23 is a diagram illustrating an example of display of a caption (graphics information) on an image, and left eye graphics information LGI and right eye graphics information RGI for displaying the caption.
[Fig. 24] Fig. 24 is a diagram for explaining that, as a view vector, among view vectors detected at a plurality of positions within an image, the one corresponding to the overlay position is used.
[Fig. 25] Fig. 25 is a diagram illustrating that objects A, B, and C exist within an image, and text information indicating an annotation on each object is overlaid at a position near each of these objects.
[Fig. 26] Fig. 26 is a block diagram illustrating an example of the configuration of a set top box.
[Fig. 27] Fig. 27 is a block diagram illustrating an example of the configuration of a bit stream processing unit that constitutes a set top box.
[Fig. 28] Fig. 28 is an example of speaker output control in the case in which view vector VV1 is larger for video objects on the left side as viewed facing a television display.
[Fig. 29] Fig. 29 is a block diagram illustrating another example of the configuration of a bit stream processing unit that constitutes a set top box.
[Fig. 30] Fig. 30 is a block diagram illustrating another example of the configuration of a bit stream processing unit that constitutes a set top box.
[Fig. 31] Fig. 31 is a diagram illustrating an example of the configuration of a television receiver.
[Fig. 32] Fig. 32 is a block diagram illustrating an example of the configuration of an HDMI transmitting unit (HDMI source) and an HDMI receiving unit (HDMI sink).
[Fig. 33] Fig. 33 is a block diagram illustrating an example of the configuration of an HDMI transmitter that constitutes an HDMI transmitting unit and an HDMI receiver that constitutes an HDMI receiving unit.
[Fig. 34] Fig. 34 is a diagram illustrating an example of the structure of TMDS transmission data (in the case in which image data whose horizontal x vertical is 1920 pixels x 1080 lines is transmitted).
[Fig. 35] Fig. 35 is a diagram illustrating the pin arrangement (type-A) of HDMI terminals of a source device and a sink device to which an HDMI cable is connected.
[Fig. 36] Fig. 36 is a diagram illustrating an example of TMDS transmission data in the first transmission mode ("Top & Bottom" mode).
[Fig. 37] Fig. 37 is a diagram illustrating an example of TMDS transmission data in the second transmission mode ("Side By Side" mode).
[Fig. 38] Fig. 38 is a diagram illustrating an example of TMDS transmission data in the third transmission mode ("Frame Sequential" mode).
[Fig. 39] Fig. 39 is a diagram for explaining a "FrameSequential" mode in HDMI 1.4 (New HDMI), and a "Frame Sequential" mode in HUMI 1.3 (LegacyHDMI).
[Fig. 40] Fig. 40 is a block diagram illustrating another example of the configuration of a bit stream processing unit that constitutes a set top box.
[Fig. 41] Fig. 41 is a diagram illustrating another example of the configuration of a stereoscopic image display system.
[Fig. 42] Fig. 42 is a diagram illustrating the relationship between the display positions of the left and right images of objects on a screen, and the reconstructed positions of the resulting stereoscopic images, in stereoscopic image display using binocular disparity.

### Description of Embodiments

Hereinbelow, a mode for carrying out the invention (hereinafter, referred to as "embodiment") will be described. It should be noted that the description will be given in the following order.
1. First Embodiment
2. Modifications

### <1. First Embodiment>

### [Example of Configuration of Stereoscopic Image Transmitting/Receiving System]

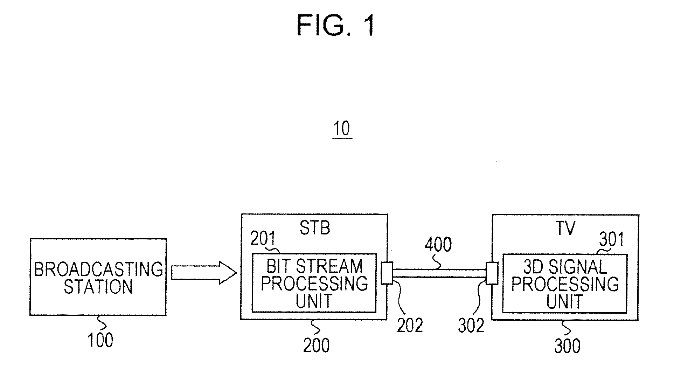

Fig. 1 illustrates an example of the configuration of a stereoscopic image transmitting/receiving system 10 as an embodiment. The stereoscopic image transmitting/receiving system 10 has a broadcasting station 100, a set top box (STB) 200, and a television receiver 300.

The set top box 200 and the television receiver 300 are connected to each other via an HDMI (High Definition Multimedia Interface) cable 400. The set top box 200 is provided with an HDMI terminal 202. The television receiver 300 is provided with an HDMI terminal 302. One end of the HUMI cable 400 is connected to the HDMI terminal 202 of the set top box 200, and the other end of the HDMI cable 400 is connected to the HDMI terminal 302 of the television receiver 300.

### [Description of Broadcasting Station]

The broadcasting station. 100 transmits bit stream data on broadcast radio waves. This bit stream data includes stereoscopic image data including left eye image data sand right eye image data, audio data, graphics data, text data, and further, view vectors/disparity vectors as disparity/parallax information.

Fog. 2 illustrates an example of the configuration of a transmit date generating unit 110 that generates the above-described bit stream data in the broadcast station 100. This example of configuration is an example in which a view vector is transmitted as numeric data. The transmit data generating unit 110 has cameras 111L and 111R, a video framing unit 112, a video encoder 113, a video encoder 113, a view vector detecting unit 14, and a view vector encoder 115. Also, the transmit date generating unit 110 has a microphone 116, an audio encoder 117, a graphics generating unit 118, a graphics encoder 119, a text generating unit 120, a text encoder 121, and a multiplexer 122.

The camera 111L shoots a left eye image to obtain left eye image data for stereoscopic image display. The camera 111R shoots a right eye image to obtain right eye image data for stereoscopic image display. The video framing unit 112 manipulates and processes the left eye image data obtained by the camera 111L and the right eye image data obtained by the camera 111R into a state according to the transmission mode.

### [Example of Transmission Mode for Stereoscopic Image Data]

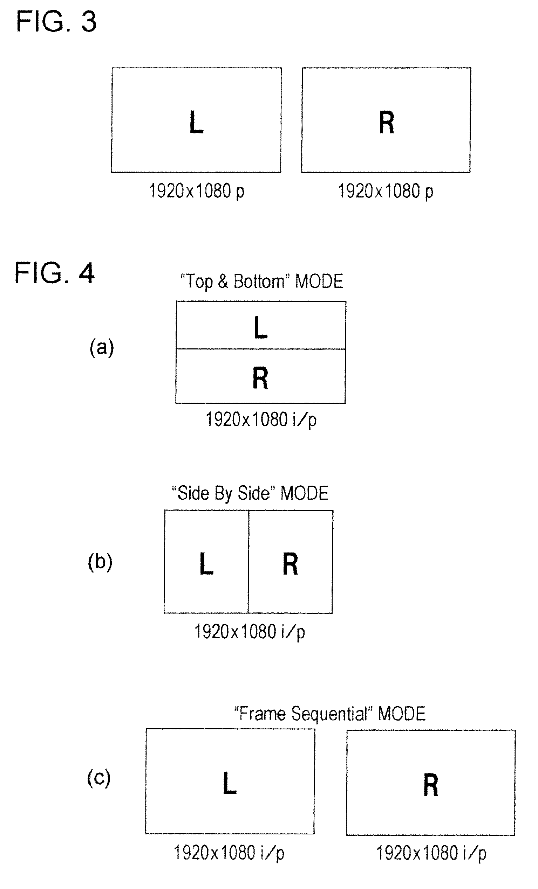

Here, while the following first to third modes are exemplified as transmission modes for stereoscopic image data (3D image data), transmission modes other than these may be used as well. Here, as illustrated in Fig. 3, the description is directed to the case in which the left eye (L) and right eye (R) image data are each image data with a predetermined resolution, for example, in a 1920 x 1080p pixel format.

The first transmission mode is a "Top & Bottom" mode in which, as illustrated in Fig. 4(a), data in each line of the left eye image data is transmitted in the first half of the vertical direction, and data in each line of the left eye image data is transmitted in the second half of the vertical direction. In this case, the lines of the left eye image data and right eye image data are thinned to 1/2, so the vertical resolution becomes half with respect to the original signal.

The second transmission mode is a "Side By Side" mode in which, as illustrated in Fig. 4(b), the pixel data of the left eye image data is transmitted in the first half of the horizontal direction, and the pixel data of the right eye image data is transmitted in the second half of the horizontal direction. In this case, the pixel data in the horizontal direction is thinned to 1/2 in each of the left eye image data and the right eye image data. The horizontal resolution becomes half with respect to the current signal,

The third transmission mode is a "Frame Sequential" mode in which, as illustrated in Fig. 4(c), left eye image data and right eye image data are transmitted while being switched sequentially field by field.

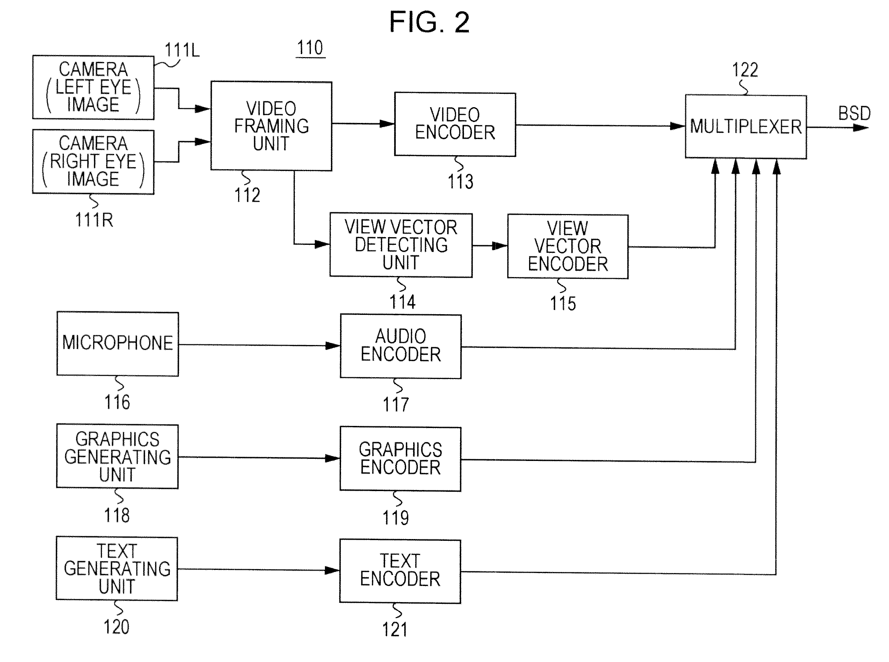

Returning to Fig. 2, the video encoder 113 applies compression encoding such as MPEG4-AVC or MPEG2 to the stereoscopic image data manipulated and processed in the video framing unit 112, and generates an elementary stream of video. Further, the video encoder 113 divides this elementary stream of video to generate PES (Packetized Elementary Stream) packets of video, and finally generates TS (Transport Stream) packets of video. Alternatively, the elementary stream is generated so as to be multiplexed into a file container such as MP4, or transmitted with real-time packets as containers.

The view vector detecting unit 114 detects, on the basis of the left eye image data and the right eye image data, a view vector as disparity information of one of the left eye image and the right eye image with respect to the other, at a predetermined position within the image. Here, the predetermined position within the image is every pixel position, a representative position in each of regions made up of a plurality of pixels, a representative position in a region where graphics information or text information is to be overlaid, or the like.

### [Detection of View Vector]

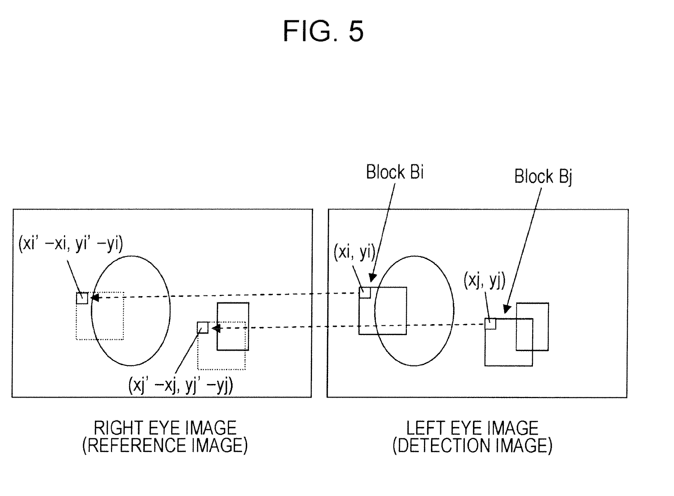

An example of detection of a view vector will be described. Here, a description will be given of an example in which a view vector of the right eye image with respect to the left eye image is detected. As illustrated in Fig. 5, the left eye image is taken as a detection image, and the right eye image is taken as a reference image. In this example, the view vector at each of positions (xi, yi) and (xj, yj) is detected.

The case of detecting the view vector at the position (xi, yi) will be described as an example. In this case, in the left eye image, for example, an 8x8 or 16x16 pixel block (disparity/parallax detection block) Bi with the pixel at the position (xi, yi) at its top left is set. Then, in the right eye image, a search is made for a pixel block that matches the pixel block Bi.

In this case, in the right eye image, a search range centered around the position (xi, yi) is set. With each of pixels within the search range sequentially taken as a target pixel, for example, an 8x8 or 16xl6 comparison block that is the same as the pixel block Bi described above is sequentially set.

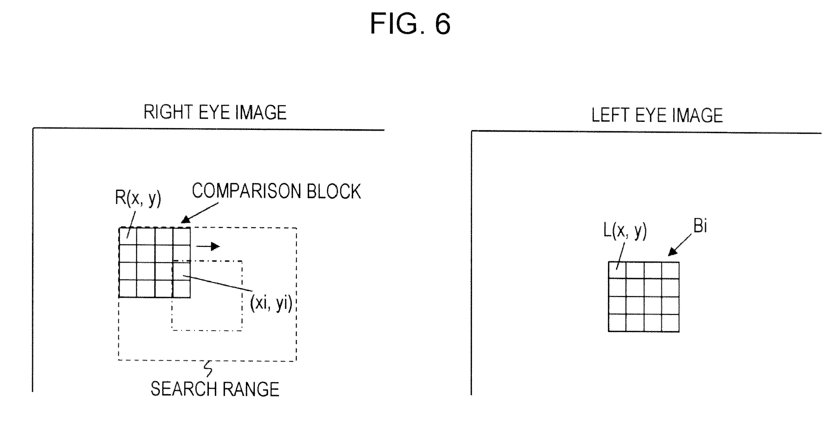

The sum of absolute differences is calculated for every corresponding pixel between the pixel block Bi and a comparison block that is sequentially set. Here, as illustrated in Fig. 6, letting a pixel value in the pixel block Bi be L(x, y), and letting a pixel value in a comparison block be R(x, y), the sum of absolute differences between the pixel block Bi and a given comparison block is represented as Σ|L(x, y)-R(x, y)l.

When n pixels are included in the search range that is set in the right eye image, n sums S1 to Sn are calculated finally, among which the smallest sum Smin is selected. Then, the position of the top-left pixel is (xi', yi') is obtained from the comparison block for which this minimum sum Smin is obtained. Thus, the view vector at the position (xi, yi) is detected as (xi' -xi, yi' -yi). Although not described in detail, for the view vector at the position (xj, yj) as well, in the left eye image, for example, a 8×8 or 16×16 pixel block Bj with the pixel at the position (xj, yj) at its top left is set, and the view vector is detected through the same process.

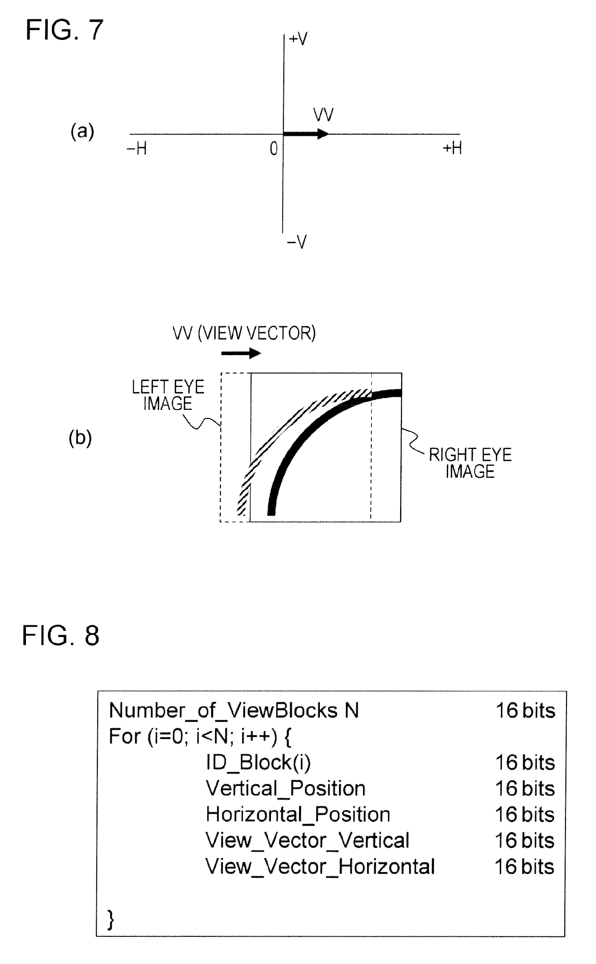

Fig. 7(a) illustrates an example of view vector VV at a predetermined position within an image, which is detected by the view vector detecting unit 114. This means that, in this case, as illustrated in Fig. 7(b), at the predetermined position within the image, the left eye image (detection image) overlaps the right eye image (reference image) when shifted by view vector VV.

Returning to Fig. 2, the view vector encoder 115 generates an elementary stream of view vector including a view vector or the like detected by the view vector detecting unit 114. The view vector elementary stream constitutes a TS packet together with an elementary stream of video or the tike.

Here, an elementary stream of view vector contains the following information. That is, the ID of a disparity detection block (ID_Block), vertical position information of the disparity detection block (Vertical_Position), horizontal position information of the disparity detection block (Horizontal_Position), and a view vector (View_Vector) constitute one set. Then, this set is repeated for the number N of disparity detection blocks.

It should be noted that the vertical and horizontal positions of a disparity detection block are offset values in the vertical direction and the horizontal direction from the origin at the top left of an image to the top-left pixel of the block. The reason why the ID of a disparity detection block is assigned to each view vector transmission is to ensure a link with the pattern of overlay information such as graphics information and text information to be overlay-displayed on an image.

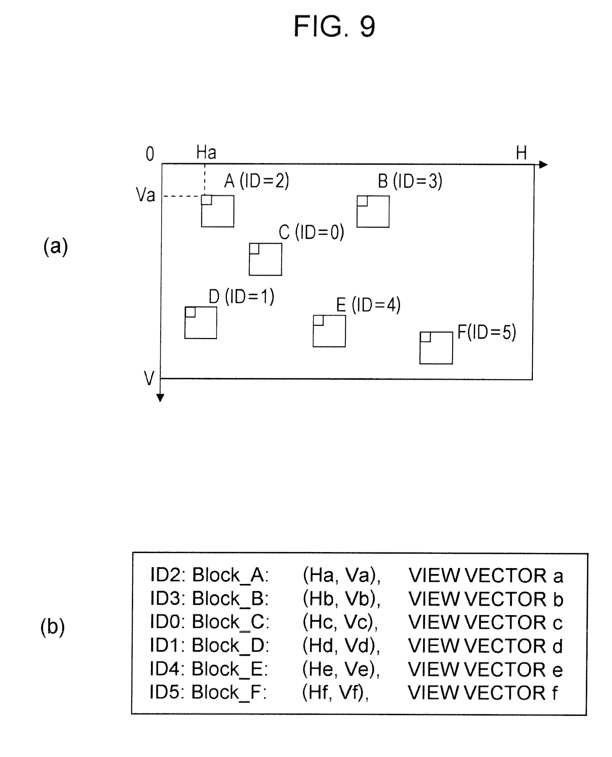

For example, as illustrated in Fig. 9(a), when A to F disparity detection blocks exist, the transmission information includes, as illustrated in Fig. 9(b), the IDs, vertical and horizontal position information, and view vectors of the disparity detection blocks A to F. For example, in Fig. 9(b), with regard to the disparity detection block A, ID2 indicates the ID of the disparity detection block A, (Ha, Va) indicates the vertical and horizontal position information of the disparity detection block A, and view vector a indicates the view vector of the disparity detection block A.

Here, the timing of detection and transmission of a view vector will be described.
As for this timing, for example, the following first to four examples are conceivable.

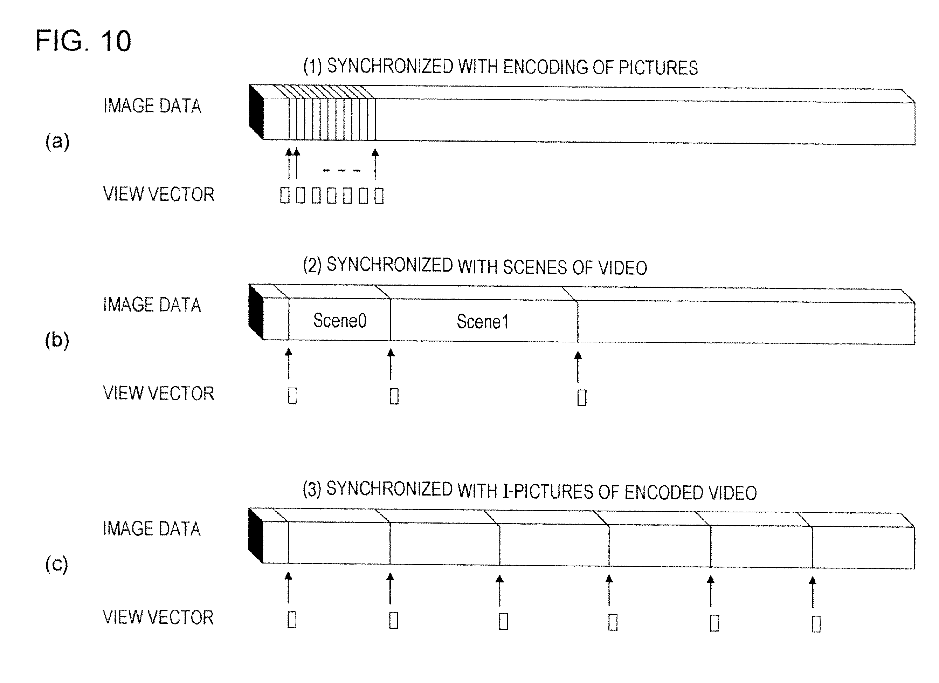

In the first example, as illustrated in Fig. 10(a), the timing is synchronized with encoding of pictures. In this case, a view vector is transmitted in picture units. The picture units are the smallest units in which a view vector is transmitted. In the second example, as illustrated in Fig. 10(b), the timing is synchronized with scenes of video. In this case, a view vector is transmitted in scene units.

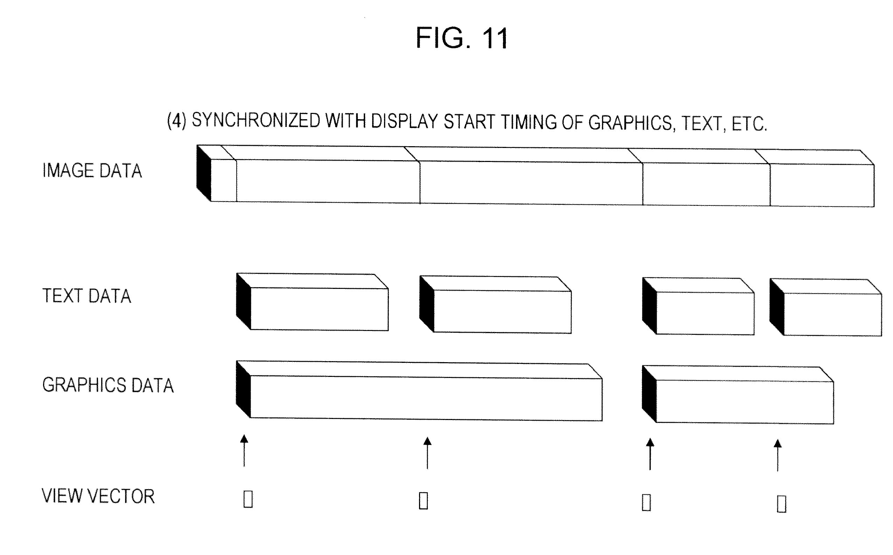

In the third example, as illustrated in Fig. 10(c), the timing is synchronized with I-pictures (Intra pictures) of encoded video, In the fourth example, as illustrated in Fig. 11, the timing is synchronized with the display start timing of graphics information, text information, and the like to be overlay-displayed on an image.

Returning to Fig. 2, the microphone 116 obtains audio data by detecting sound corresponding to the images shot with the cameras 111L and 111R. The audio encoder 117 applies compression encoding such as MPEG-2 Audio AAC to the audio data obtained with the microphone 116, and generates an elementary stream of audio. Further, the audio encoder 117 divides this elementary stream of audio to generate PES packets of audio, and finally generates TS packets.

The graphics generating unit 118 generates the data of graphics information (graphics data) to be overlaid on an image. The graphics information is, for example, a caption. This graphics data is bitmap data. Idling offset information indicating an overlay position on an image is attached to this graphics data. This idling offset information indicates, for example, the offset values in the vertical direction and horizontal direction from the origin at the top left of the image to the top-left pixel at the overlay position of the graphics information. It should be noted that the standard for transmitting caption data as bitmap data has been standardized and implemented as DVB_Subtitling in DVB that is the digital broadcasting standard in Europe.

The graphics encoder 119 generates an elementary stream of the graphics data generated by the graphics generating unit 118. Then, the graphics encoder 119 finally generates the above-described TS packets.

The text generating unit 120 generates the data of text information (text data) to be overlaid on an image. The text information is, for example, electronic program guide or teletext information. Like the graphics data described above, idling offset information indicating an overlay position on an image is attached to this text data. This idling offset information indicates, for example, the offset values in the vertical direction and horizontal direction from the origin at the top left of the image to the top-left pixel at the overlay position of the text information. It should be noted that as examples of transmission of text data, EPG implemented as program scheduling, and CC_data (Closed Caption) of the digital terrestrial standard ATSC in the United States exist.

The text encoder 121 generates an elementary stream of the text data generated by the text generating unit 120.

The multiplexer 122 multiplexes the respective packetized elementary streams outputted from the video encoder 113, the view vector encoder 115, the audio encoder 117, the graphics encoder 119, and the text encoder 121. Then, the multiplexer 122 outputs bit stream data (transport stream) BSD as transmission data.

Operation of the transmit data generating unit 110 illustrated in Fig. 2 will be briefly described. A left eye image is shot with the camera 111L. Left eye image data for stereoscopic image display obtained with the camera 111L is supplied to the video framing unit 112. Also, a right eye image is shot with the camera 111R. Right eye image data for stereoscopic image display obtained with the camera 111R is supplied to the video framing unit 112. In the video framing unit 112, the left eye image data and the right eye image data are manipulated and processed into a state according to the transmission mode, and stereoscopic image data is obtained (see Figs. 4(a) to 4(c)).

The stereoscopic image data obtained in the video framing unit 112 is supplied to the video encoder 113. In the video encoder 113, compression encoding such as MPEG4-AVC or MPEG2 is applied to the stereoscopic image data to generate an elementary stream of video, and finally video packets are supplied to the multiplexer 122.

Also, the left eye image data and the right eye image data obtained with the cameras 111L and 111R are supplied to the view vector detecting unit 114 via the video framing unit 112. In the view vector detecting unit 114, on the basis of the left eye image data and the right eye image data, a disparity detection block is set at a predetermined position within an image, and a view vector as disparity information of one of the left eye image and the right eye image with respect to the other is detected.

The view vector at a predetermined position within an image which is detected by the view vector detecting unit 114 is supplied to the view vector encoder 115. In this case, the ID of the disparity detection block, the vertical position information of the disparity detection block, the horizontal position information of the disparity detection block, and the view vector are passed as one set. In the view vector encoder 115, an elementary stream of view vector including transmission information about view vector (see Fig. 8) is generated, and supplied to the multiplexer 122.

Also, with the microphone 116, sound corresponding to the images shot with the cameras 111L and 111R is detected. The audio data obtained with the microphone 116 is supplied to the audio encoder 117. In the audio encoder 117, compression encoding such as MPEG-2 Audio AAC is applied to the audio data, and an elementary stream of audio is generated and supplied to the multiplexer 122.

Also, in the graphics generating unit 118, the data of graphics information (graphics data) to be overlaid on an image is generated. This graphics data (bitmap data) is supplied to the graphics encoder 119. Idling offset information indicating an overlay position on an image is attached to this graphics data. In the graphics encoder 119, predetermined compression encoding is applied to this graphics data to generate an elementary stream, which is supplied to the multiplexer 122.

Also, in the text generating unit 120, the data of text information (text data) to be overlaid on an image is generated. This text data is supplied to the text encoder 121. Like the graphics data described above, idling offset information indicating an overlay position on an image is attached to this text data. In the text encoder 121, predetermined compression encoding is applied to this text data to generate an elementary stream, and finally TS packets of text are obtained. The TS packets of text are supplied to the multiplexer 122.

In the multiplexer 122, the packets of the elementary streams supplied from the respective encoders are multiplexed, and bit stream data (transport stream) BSD as transmission data is obtained.

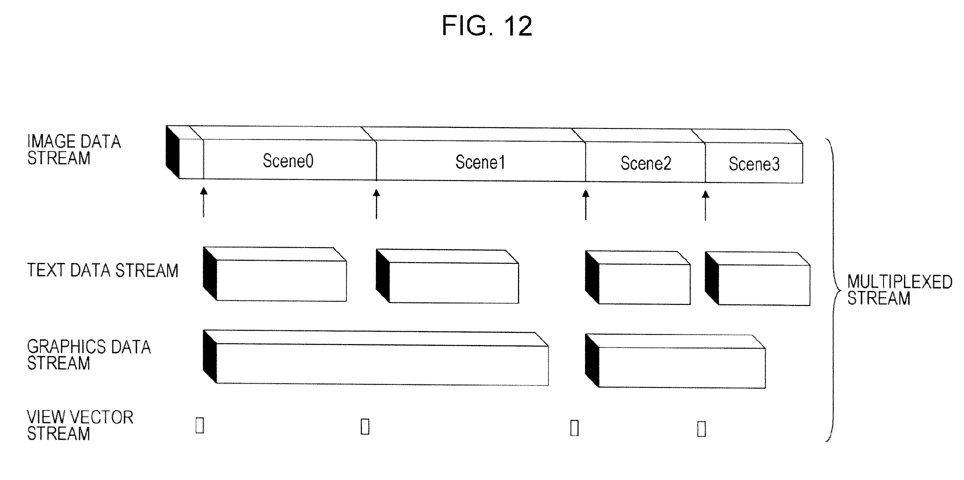

Fig. 12 illustrates an example of data streams multiplexed in the transmit data generating unit 110 illustrated in Fig. 2. It should be noted that this example represents a case in which a view vector is detected in video scene units (see Fig. 10(b)). It should be noted that packets of the respective streams are assigned timestamps for indication of synchronization, which makes it possible to control the overlay timing of graphics information, text information, or the like onto an image, at the receiving side.

It should be noted that the transmit data generating unit 110 illustrated in Fig. 2 described above is configured to transmit transmission information about view vector (see Fig. 8) as an independent elementary stream to the receiving side. However, it is also conceivable to transmit transmission information about view vector by embedding the transmission information in another stream. For example, transmission information about view vector is transmitted while being embedded as user data in a video stream. Also, for example, transmission information about view vector is transmitted while being embedded in a graphics or text stream.

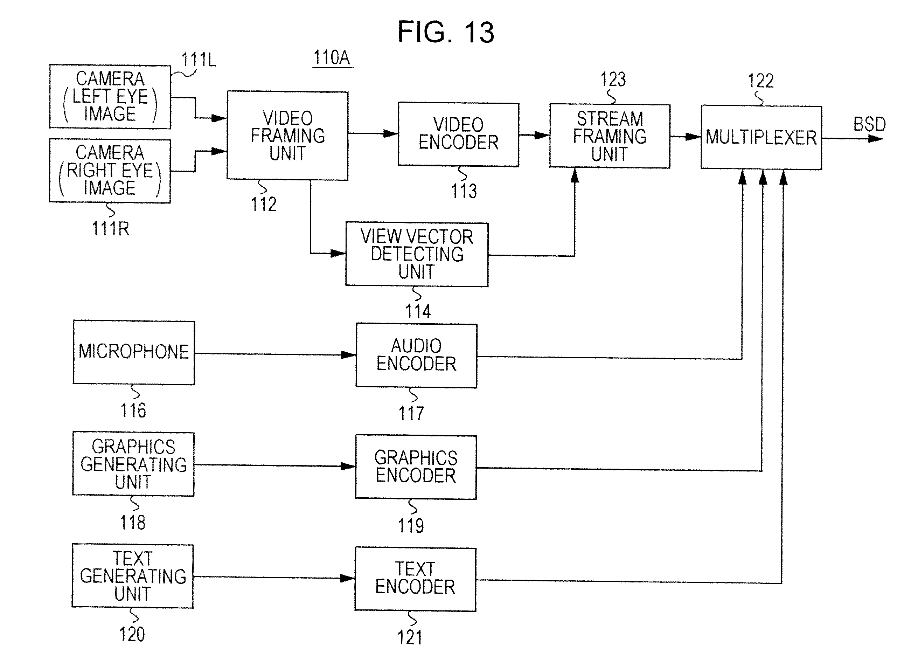

Fig. 13 illustrates an example of the configuration of a transmit date generating unit 110A. This example is also an example in which a view vector is transmitted as numeric information. The transmit data generating unit 110A is configured to transmit transmission information about view vector by embedding the transmission information as user data in a video stream. In Fig. 13, portions corresponding to those in Fig. 2 are denoted by the same symbols, and their detailed description is omitted.

In the transmit data generating unit 110A, a stream framing unit 123 is inserted between the video encoder 113 and the multiplexer 122. The view vector at a predetermined position within an image which is detected by the view vector detection 114 is supplied to the stream framing unit 123. In this case, the ID of a disparity detection block, the vertical position information of the disparity detection block, the horizontal position information of the disparity detection block, and the view vector are passed as one set.

In the stream framing unit 123, transmission information about view vector (see Fig. 8) is embedded as user data in a video stream.

Although detailed description is omitted, the transmit data generating unit 110A illustrated in Fig. 13 is otherwise configured in the same manner as the transmit data generating unit 110 illustrated in Fig. 2.

Also, the transmit data generating unit 110 illustrated in Fig. 2 described above and the transmit data generating unit 110A illustrated in Fig. 13 described above each transmit a view vector as numeric information (see Fig. 8). However, instead of transmitting a view vector as numeric information, it is also conceivable to transmit a view vector while including the view vector in the overlay information (for example, graphics information or text information) to be overlaid on an image.

For example, in the case in which a view vector is transmitted while being included in the data of graphics information., at the transmitting side, graphics data corresponding to both left eye graphics information to be overlaid on the left eye image and right eye graphics information to be overlaid on the right eye image is generated. In this case, the left eye graphics information and the right eye graphics information are the same graphics information. However, their display positions within the images are such that, for example, with respect to the left eye graphics information, the right eye graphics information is shifted in the horizontal direction by the horizontal directional component of the view vector corresponding to its display position.

Also, for example, in the case in which a view vector is transmitted while being included in the data of text information, at the transmitting side, text data corresponding to both left eye text information to be overlaid on the left eye image and right eye text information to be overlaid on the right eye image is generated. In this case, the left eye text information and the right eye text information are the same text information. However, their overlay positions within the images are such that, for example, with respect to the left eye text information, the right eye text information is shifted in the horizontal direction by the horizontal directional component of the view vector.

For example, as a view vector, among view vectors detected at a plurality of positions within an image, the view vector corresponding to the overlay position is used. Also, for example, as a view vector, among view vectors detected at a plurality of positions within an image, the view vector at the position recognized as farthest away in perspective is used.

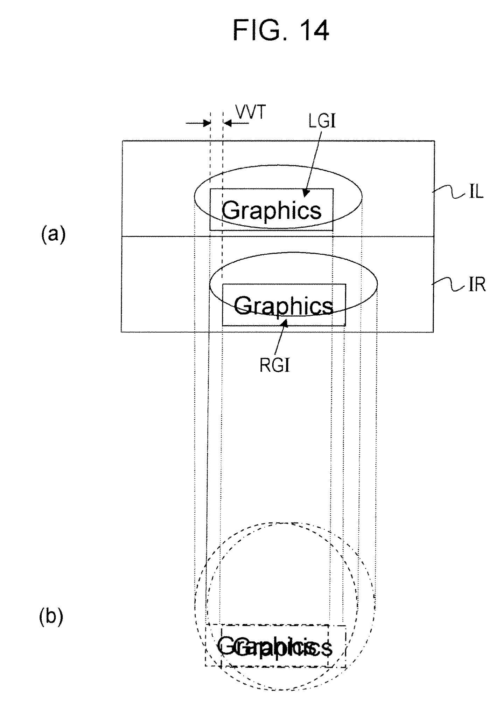

Fig. 14(a) illustrates the overlay positions of left eye graphics information and right eye graphics information, in the case in which the transmission mode is the first transmission mode ("Top & Bottom" mode) described above. These left eye graphics information and right eye graphics information are the same information. It should be noted, however, that with respect to left eye graphics information LGI to be overlaid on left eye image IL, right eye graphics information RGI to be overlaid on right eye image IR is at a position shifted in the horizontal direction by the horizontal directional component VVT of the view vector.

Graphics data is generated in such a way that with respect to images IL and IR, as illustrated in Fig. 14(a), graphics information LGI and RGI are respectively overlaid. Thus, as illustrated in Fig. 14(b), the viewer can observe, together with images IL and IR, graphics information LGI and RGI with a disparity, thereby making it possible to perceive perspective in graphics information as well.

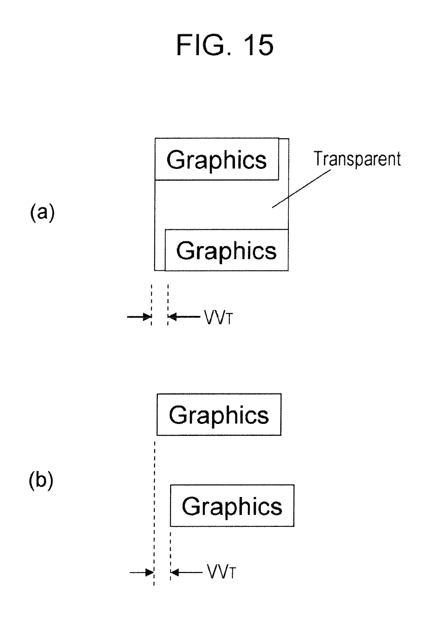

For example, as illustrated in Fig. 15(a), the graphics data of graphics information LGI and RGI is generated as data of a single region. In this case, data of the portion other than graphics information LGI and RGI may be generated as transparent data. Also, for example, as illustrated in Fig. 15(b), the graphics data of each of graphics information LGI and RGI is generated as data of a separate region.

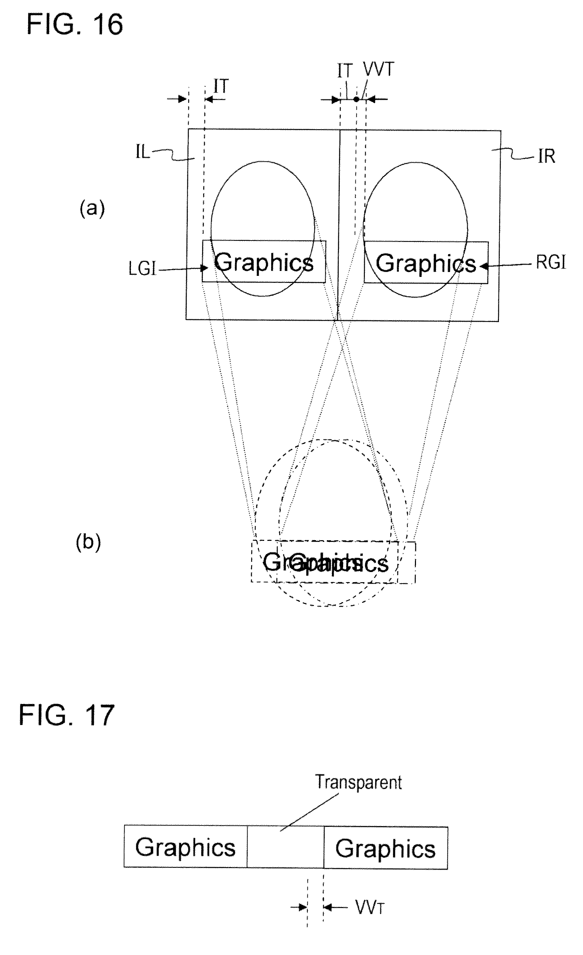

Fig. 16(a) illustrates the overlay positions of left eye graphics information and right eye graphics information, in the case in which the transmission mode is the second transmission mode ("Side By Side" mode) described above. These left eye graphics information and right eye graphics information are the same information. It should be noted, however, that with respect to left eye graphics information LGI to be overlaid on left eye image IL, right eye graphics information RGI to be overlaid on right eye image IR is at a position shifted in the horizontal direction by the horizontal directional component VVT of the view vector. It should be noted that IT denotes idling offset value.

Graphics data is generated in such a way that with respect to images IL and IR, as illustrated in Fig. 16(a), graphics information LGI and RGI are respectively overlaid. Thus, as illustrated in Fig. 16(b), the viewer can observe, together with images IL and IR, graphics information LGI and RGI with a disparity, thereby making it possible to perceive perspective in graphics information as well.

For example, as illustrated in Fig. 17, the graphics data of graphics information LGI and RGI is generated as data of a single region. In this case, data of the portion other than graphics information LGI and RGI may be generated as transparent data.

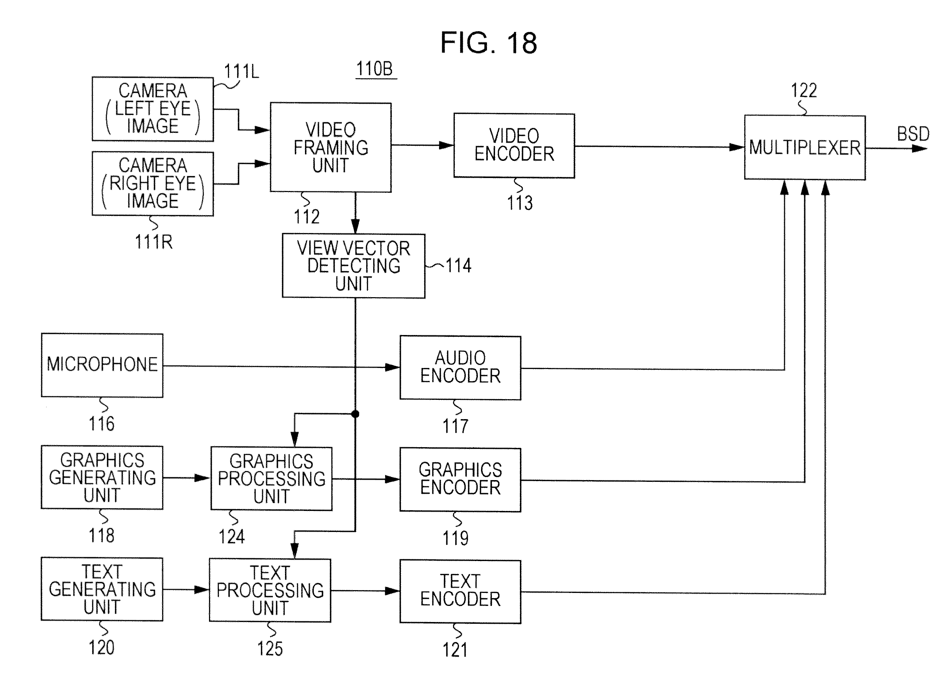

Fig. 18 illustrates an example of the configuration of a transmit data generating unit 110B. The transmit data generating unit 110B is configured to transmit a view vector while including the view vector in the data of graphics information or text information. In Fig. 18, portions corresponding to those in Fig. 2 are denoted by the same symbols, and their detailed description is omitted.

In the transmit data generating unit 110B, a graphics processing unit 124 is inserted between the graphics generating unit 118 and the graphics encoder 119. Also, in the transmit data generating unit 110B, a text processing unit 125 is inserted between the text unit 120 and the text encoder 121. Then, the view vector at a predetermined position within an image which is detected by the view vector detection 114 is supplied to the graphics processing unit 124 and the text processing unit 125.

In the graphics processing unit 124, on the basis of the graphics data generated by the graphics generating unit 118, the data of left eye graphics information LGI to be overlaid on left eye image IL and the data of right eye graphics information RGI to be overlaid on right eye image IR, are generated. In this case, while the left eye graphics information and the right eye graphics information are the same graphics information, their overlay positions within the images are such that, for example, with respect to the left eye graphics information, the right eye graphics information is shifted in the horizontal direction by the horizontal directional component VVT of the view vector (see Fig. 14(a) and Fig. 16(a)).

The graphics data generated in the graphics processing unit 124 in this way is supplied to the graphics encoder 119. It should be noted that idling offset information indicating an overlay position on an image is attached to this graphics data. In the graphics encoder 119, an elementary stream of the graphics data generated in the graphics processing unit 124 is generated.

Also, in the text processing unit 125, on the basis of the text data generated in the text generating unit 120, the data of left eye text information to be overlaid on the left eye image and the data of right eye text information to be overlaid on the right eye image are generated. In this case, while the left eye text information and the right eye text information are the same text information, their overlay positions within the images are such that, for example, with respect to the left eye text information, the right eye text information is shifted in the horizontal direction by the horizontal directional component VVT of the view vector.

The text data generated in the text processing unit 125 in this way is supplied to the text encoder 121. It should be noted that idling offset information indicating an overlay position on an image is attached to this text data. In the text encoder 121, an elementary stream of the text data generated in the text processing unit is generated.

Although detailed description is omitted, the transmit data generating unit 110B illustrated in Fig. 18 is otherwise configured in the same manner as the transmit data generating unit 110 illustrated in Fig. 2.

### [Description of Sep Top Box]

Returning to Fig. 1, the set top box 200 receives bit stream data (transport stream) transmitted from the broadcasting station 100 while being carried on broadcast waves. This bit stream data includes stereoscopic image data including left eye image data and right eye image data, audio data, graphics data, text data, and further view vectors as disparity information.

The set top box 200 has a bit stream processing unit 201. The bit stream processing unit 201 extracts stereoscopic image data, audio data, graphics data, text data, view vectors, and the like from the bit stream data. Also, the bit stream processing unit 201 generates the data of a left eye image and a right eye image on which the overlay information has been overlaid, by using stereoscopic image data, graphics data, text data, and the like.

Here, in the case in which a view vector is transmitted as numeric data, on the basis of the view vector and graphics data, left eye graphics information and right eye graphics information to be overlaid on the left eye image and the right eye image, respectively, are generated. In this case, the left eye graphics information and the right eye graphics information are the same graphics information. However, their overlay positions within the images are such that, for example, with respect to the left eye graphics information, the right eye graphics information is shifted in the horizontal direction by the horizontal directional component of the view vector.

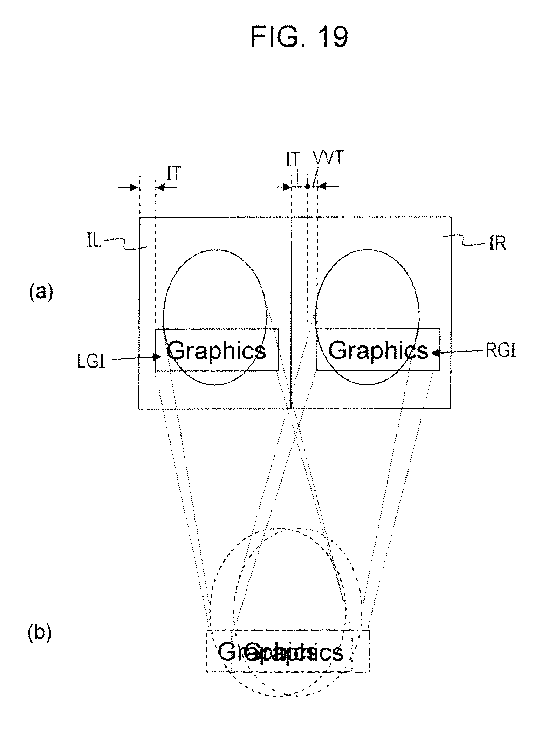

Fig. 19(a) illustrates the overlay positions of left eye graphics information and right eye graphics information, in the case in which the transmission mode is the second transmission mode ("Side By Side" mode) described above.

With respect to left eye graphics information LGI to be overlaid on left eye image IL, right eye graphics information RGI to be overlaid on right eye image IR is at a position shifted in the horizontal direction by the horizontal directional component VVT of the view vector. It should be noted that IT denotes idling offset value.

Graphics data is generated in such a way that with respect to images IL and IR, as illustrated in Fig. 19(a), graphics information LGI and RGI are respectively overlaid.

The bit stream processing unit 201 synthesizes the generated left eye graphics data and the right eye graphics data with the stereoscopic image data (left eye image data and right eye image data) extracted from the bit stream data, thereby acquiring processed stereoscopic image data, According to this stereoscopic image data, as illustrated in Fig. 19(b), the viewer can observe, together with images IL and IR, graphics information LGI and RGI with a disparity, thereby making it possible to perceive perspective in graphics information as well.

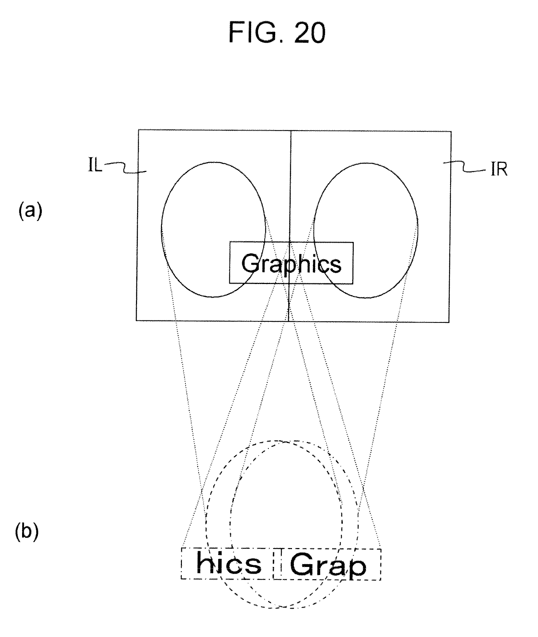

It should be noted that Fig. 20(a) illustrates a state in which a graphics image based on the graphics data extracted from bit stream data is overlaid on each of images IL and IR as it is. In this case, as illustrated in Fig. 20(b), the viewer observes the left half of the graphics information together with left eye image IL, and the right half of the graphics information together with right eye image IR. Consequently, the graphics information can no longer be recognized properly.

Here, in the case in which a view vector is transmitted as numeric data, on the basis of the view vector and text data, left eye text information and right eye text information to be overlaid on the left eye image and the right eye image, respectively, are generated. In this case, the left eye text information and the right eye text information are the same text information. However, their overlay positions within the images are such that, for example, with respect to the left eye text information, the right eye text information is shifted in the horizontal direction by the horizontal directional component of the view vector.

The bit stream processing unit 201 synthesizes the data (bitmap data) of the generated left eye text data and right eye text data, with the stereoscopic image data (left eye image data and right eye image data) extracted from the bit stream data, thereby obtaining processed stereoscopic image data. According to this stereoscopic image data, as in the case of the graphics information described above, the viewer can observe, together with each of the left eye imago and the right eye image, each text information with a disparity, thereby making it possible to perceive perspective also in text information.

In this case, it is conceivable to use the following view vector as a view vector that gives a disparity between the left eye graphics information and the right eye graphics information, or between the left eye text information and the right eye text information.

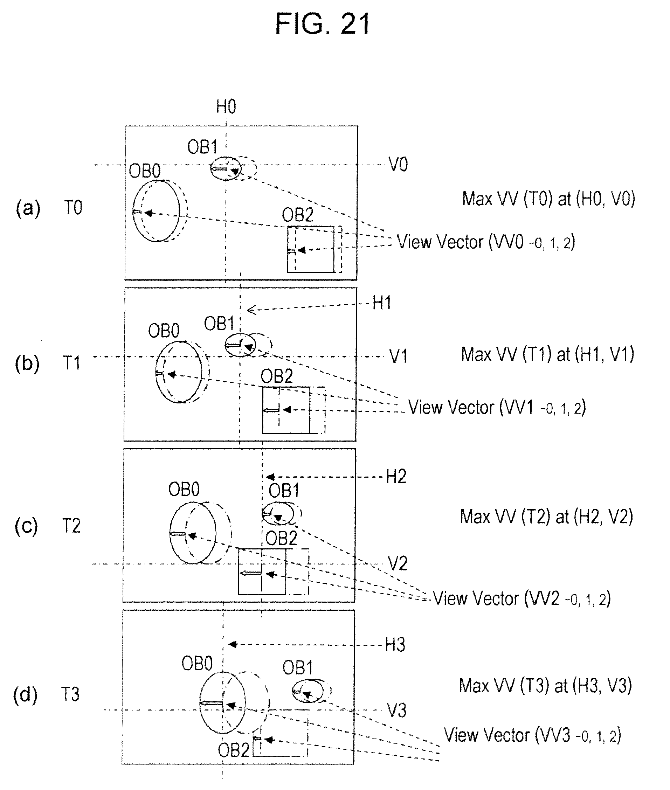

For example, as a view vector, it is conceivable to use, among view vectors detected at a plurality of positions within an image, the view vector at the position recognized as being farthest away in perspective. Figs. 21(a), 21(b), 21(c), and 21(d) illustrate view vectors at three object positions at each of times T0, T1, T2, and T3.

At time T0, view vector VV0-1 at position (H0, V0) corresponding to object 1 is the largest view vector MaxVV(T0). At time T1, view vector VV1-1 at position (H1, V1) corresponding to object 1 is the largest view vector MaxVV(T1). At time T2, view vector VV2-2 at position (H2, V2) corresponding to object 2 is the largest view vector MaxVV(T2). At time T3, view vector VVT3-3 at position (H3, V3) corresponding to object 3 is the largest view vector MaxVV(T3).

In this way, by using, as a view vector, the view vector at the position recognized as being farthest away in perspective among view vectors detected at a plurality of positions within an image, it is possible to display graphics information or text information in front of the object within the image which is nearest in perspective.

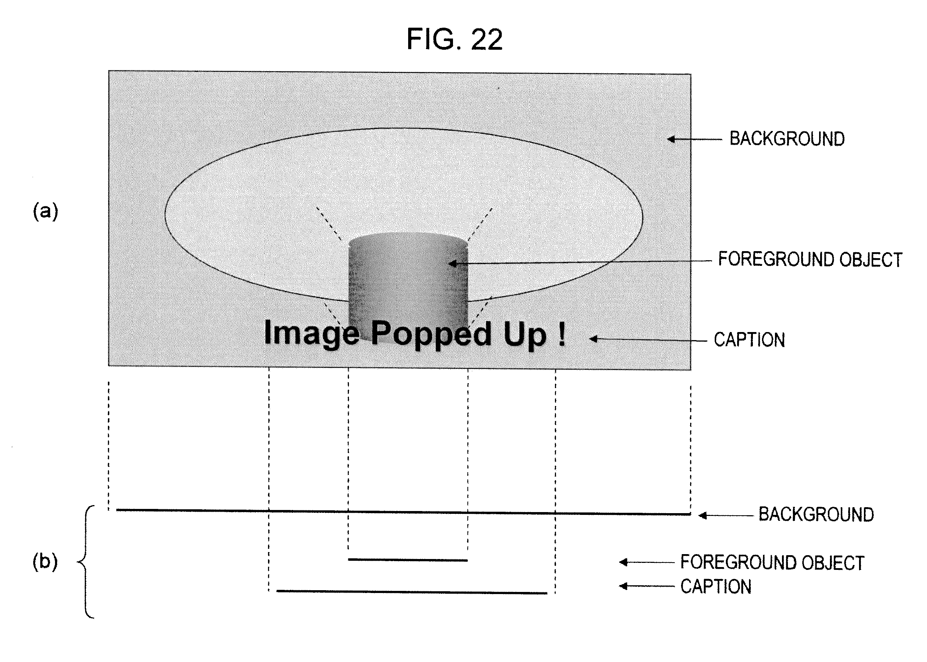

Fig. 22(a) illustrates an example of display of a caption (graphics information) on an image. This example of display is an example in which a caption is overlaid on an image made up of the background and a foreground object. Fig. 22(b) illustrates the perspective of the background, the foreground object, and the caption, indicating that the caption is recognized as being nearest.

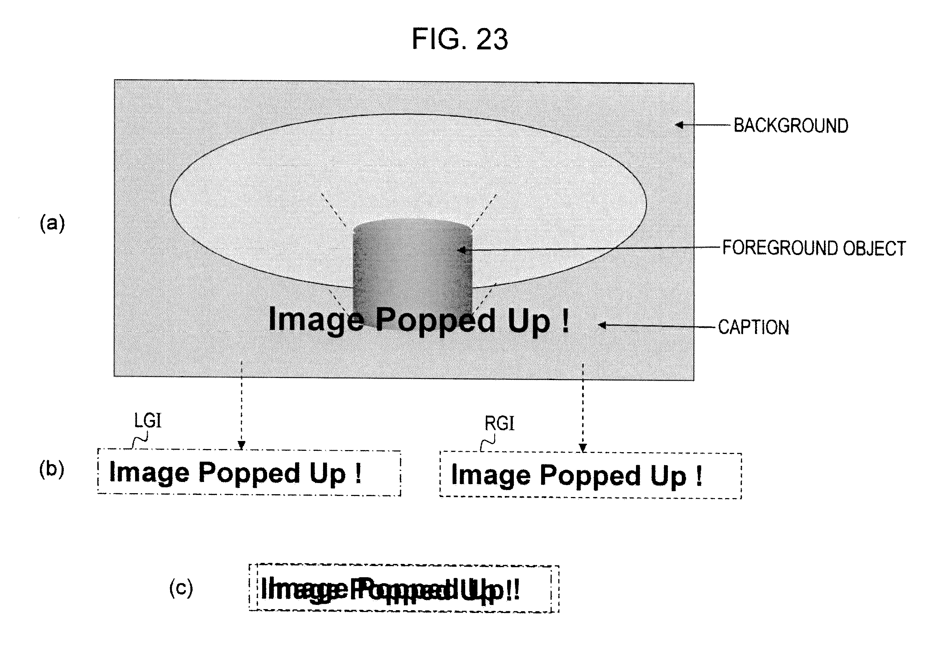

Fig. 23(a) illustrates an example of display of a caption (graphics information) on an image. Fig. 23(b) illustrates left eye graphics information LGI and right eye graphics information RGI for displaying the caption. Then, Fig. 23(c) illustrates that a disparity is given to each of graphics information LGI and RGI so that the caption is recognized as being nearest.

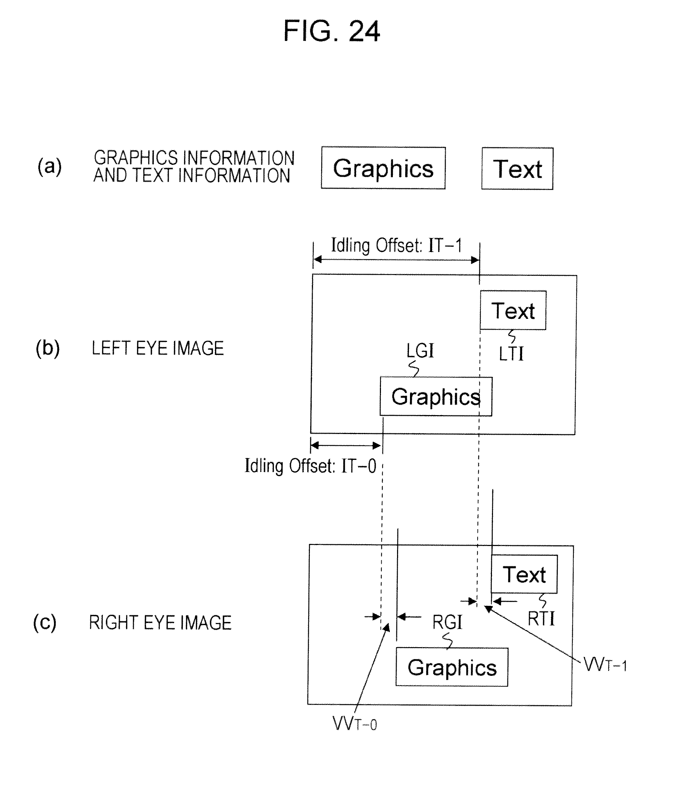

Also, as a view vector, it is conceivable to use, among view vectors detected at a plurality of positions within an image, the view vector corresponding to the overlay position. Fig. 24(a) illustrates graphics information based on graphics data extracted from bit stream data, and text information based on text data extracted from the bit stream data.

Fig. 24(b) illustrates a state in which left eye graphics information LGI and left eye text information LTI are overlaid on the left eye image. In this case, the overlay position of left eye graphics information LGI is regulated by idling offset value (IT-0) in the horizontal direction. Also, the overlay position of left eye text information LTI is regulated by idling offset value (IT-1) in the horizontal direction.

Fig. 24(c) illustrates a state in which right eye graphics information RGI and right eye text information RTI are overlaid on the right eye image. In this case, the overlay position of right eye graphics information RGI is regulated by idling offset value (IT-0) in the horizontal direction, and is further shifted from the overlay position of left eye graphics information LGI by the horizontal directional component VVT-0 of the view vector corresponding to this overlay position. Also, the overlay position of right eye text information RTI is regulated by idling offset value (IT-1) in the horizontal direction, and is further shifted from the overlay position of left eye text information LTI by the horizontal directional component VVT-1 of the view vector corresponding to this overlay position.

It should be noted that the above description is directed to the case in which graphics information based on graphics data extracted from bit stream data, or text information based on text data extracted from bit stream data is overlaid on the left eye image and the right eye image. Alternatively, a case is also conceivable in which graphics data or text data is generated within the set top box 200, and information based on those data is overlaid on the left eye image and the right eye image.

In that case as well, by using a view vector at a predetermined position within an image which is extracted from the bit stream data, disparity can be imparted between the left eye graphics information and the right eye graphics information, or between the left eye text information and the right eye text information. Thus, in display of graphics information or text information, it is possible to give appropriate perspective while maintaining consistency of perspective with the perspective of each object within the image.

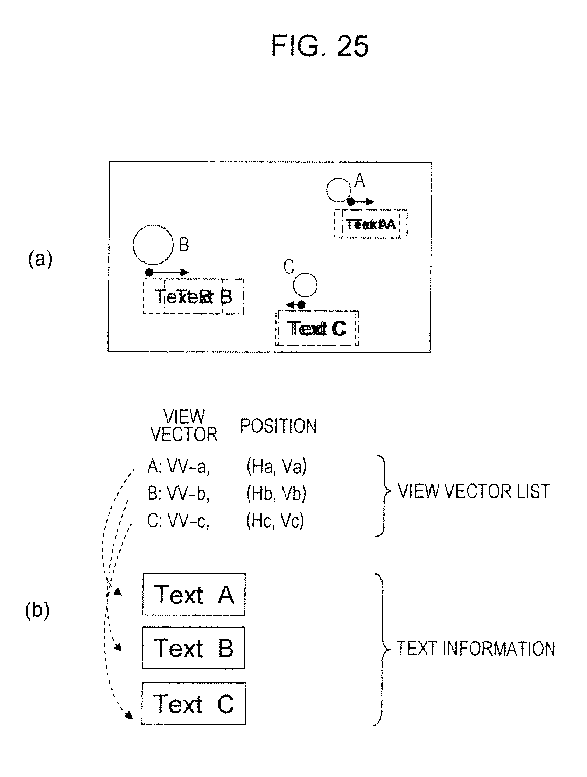

Fig. 25(a) illustrates that objects A, B, and C exist within an image and, for example, text information indicating an annotation on each object is overlaid at a position near each of these objects.

Fig. 25(b) illustrates that a view vector list, which indicates the correspondence between the positions of objects A, B, and C and view vectors at the positions, and the individual view vectors are used in the case of giving a disparity to the text information indicating an annotation on each of objects A, B, and C. For example, text information "Text" is overlaid near object A, and disparity corresponding to view vector VV-a at the position (Ha, Va) of object A is given between its left eye text information and right eye text information. It should be noted that the same applies to the text information overlaid near each of objects B and C.

Next, the case in which a view vector is transmitted while being included in the data of graphics information or text information will be described. In this case, graphics data extracted from bit stream data includes the data of left eye graphics information and right eye graphics information to which a disparity is given by the view vector. Likewise, text data extracted from bit stream data includes the data of left eye text information and right eye text information to which a disparity is given by the view vector.

Accordingly, the bit stream processing unit 201 simply synthesizes the graphics data or text data extracted from the bit stream data, with stereoscopic image data (left eye image data and right eye image data) extracted from the bit stream data, thereby acquiring processed stereoscopic image data. It should be noted that as for the text data, it is necessary to convert the text data (code data) into bitmap data.

### [Example of Configuration of Set Top Box]

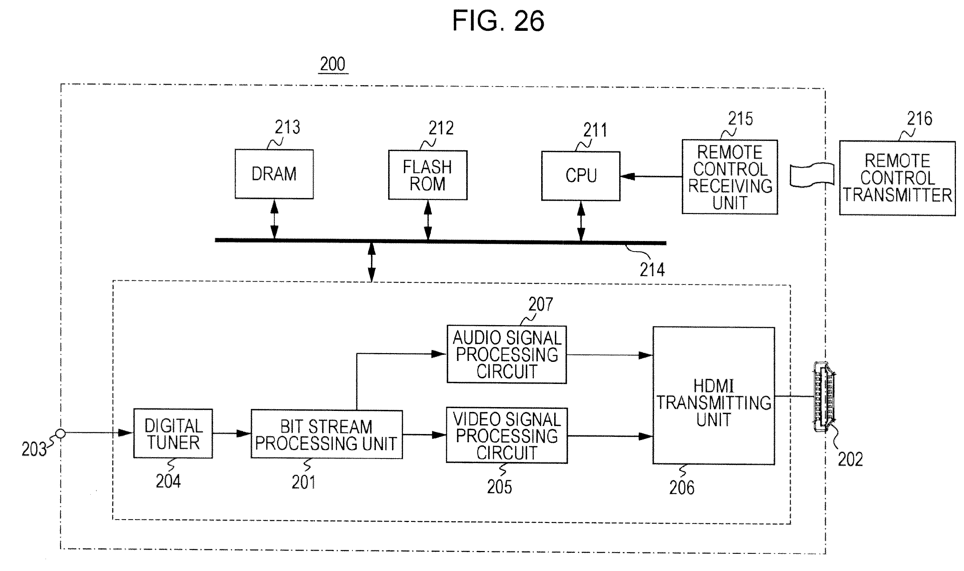

An example of the configuration of the set top box 200 will be described. Fig. 26 illustrates an example of the configuration of the set top box 200. The set top box 200 has the bit stream processing unit 201, the HDMI terminal 202, an antenna terminal 203, a digital tuner 204, a video signal processing circuit 205, an HDMI transmitting unit 206, and an audio signal processing circuit 207. Also, the set top box 200 has a CPU 211, a flash ROM 212, a DRAM 213, an internal bus 214, a remote control receiving unit 215, and a remote control transmitter 216.

The antenna terminal 203 is a terminal to which a television broadcast signal received by a receive antenna (not illustrated) is inputted. The digital tuner 204 processes the television broadcast signal inputted to the antenna terminal 203, and outputs predetermined bit stream data (transport stream) corresponding to a user-selected channel.

As described above, the bit stream processing unit 201 extracts stereoscopic image data (left eye image data and right eye image data), audio data, graphics data, text data, view vectors, and the like from the bit stream data. Then, as described above, the bit stream processing unit 201 synthesizes the data of overlay information (graphics information or text information) with the stereoscopic image data to thereby acquire stereoscopic image data for display. Also, the bit stream processing unit 201 outputs audio data. The detailed configuration of the bit stream processing unit 201 will be described later.

The video signal processing circuit 205 performs an image quality adjustment process or the like as required on the stereoscopic image data outputted from the bit stream processing unit 201, and supplies the processed stereoscopic image data to the HDMI transmitting unit 206. The audio signal processing circuit 207 performs a sound quality adjustment process or the like as required on the audio data outputted from the bit stream processing unit 201, and supplies the processed audio data to the HDMI transmitting unit 206.

The HDMI transmitting unit 206 sends out baseband image (video) and audio data from the HDMI terminal 202 through HDMI-compliant communication. In this case, since the transmission is by TMDS channels of HDMI, each of the image and audio data is packed, and outputted from the HDMI transmitting unit 206 to the HDMI terminal 202. Details of the HDMI transmitting section 206 will be described later.

The CPU 211 controls the operation of each unit of the set top box 200. The flash ROM 212 performs storage of control software and saving of data. The DRAM 213 constitutes a work area for the CPU 211. The CPU 211 expands software and data read from the flash ROM 212 onto the DRAM 213 to activate the software, thereby controlling each unit of the set top box 200.

The remote control receiving unit 215 receives a remote control signal (remote control code) supplied from the remote control transmitter 216, and supplies the remote control signal to the CPU 211. The CPU 211 controls each unit of the set top box 200 on the basis of this remote control code. The CPU 211, the flash ROM 212, and the DRAM 213 are connected to the internal bus 214.

Operation of the set top box 200 will be briefly described, A television broadcast signal inputted to the antenna terminal 203 is supplied to the digital tuner 204. In the digital tuner 204, the television broadcast signal is processed, and predetermined bit stream data (transport stream) corresponding to a user-selected channel is outputted.

The bit stream data outputted from the digital tuner 204 is supplied to the bit stream processing unit 201. In the bit stream processing unit 201, stereoscopic image data (left eye image data and right eye image data), audio data, graphics data, text data, view vectors, and the like are extracted from the bit stream data. Also, in the bit stream processing unit 201, the data of overlay information (graphics information or text information) is synthesized with the stereoscopic image data, and stereoscopic image data for display is generated.

After the stereoscopic image data for display generated by the bit stream processing unit 201 undergoes an image quality adjustment process or the like as required in the video signal processing circuit 205, the stereoscopic image data for display is supplied to the HDMI transmitting unit 206. Also, after the audio data obtained in the bit stream processing unit 201 undergoes a sound quality adjustment process or the like as required in the audio signal processing circuit 207, the audio data is supplied to the HDMI transmitting unit 206. The stereoscopic image data and audio data supplied to the HDMI transmitting unit 206 are sent out to the HDMI cable 400 from the HDMI terminal 202.

### [Example of Configuration of Bit Stream Processing Unit]

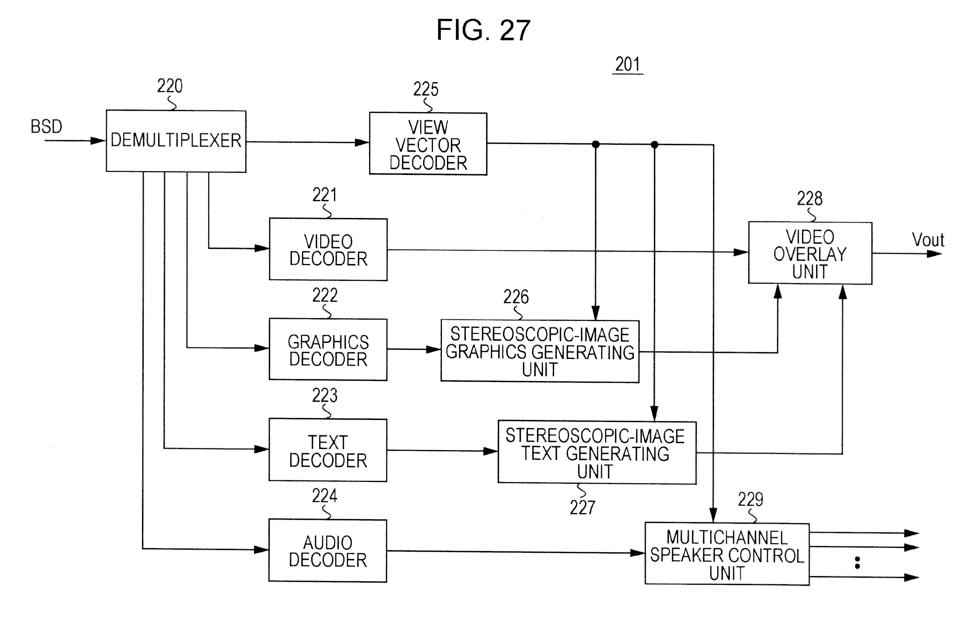

An example of the configuration of the bit stream processing unit 201 will be described above. Fig. 27 illustrates an example of the configuration of the bit stream processing unit 201. The bit stream processing unit 201 is configured in a manner corresponding to the transmit data generating unit 110 illustrated in Fig. 2 described above. The bit stream processing unit 201 has a demultiplexer 220, a video decoder 221, a graphics decoder 222, a text decoder 223, an audio decoder 224, and a view vector decoder 225. Also, the bit stream processing unit 201 has a stereoscopic-image graphics generating unit 226, a stereoscopic-image text generating unit 227, a video overlay unit 228, and a multichannel speaker control unit 229.

The demultiplexer 220 extracts TS packets of video, audio, view vector, graphics, and text from bit stream data BSD, and sends the TS packets to each decoder.

The video decoder 221 performs processing reverse to that of the video encoder 113 of the transmit data generating unit 110 described above. That is, the video decoder 221 reconstructs an elementary stream of video from the packets of video extracted by the demultiplexer 220, and performs a decoding process to obtain stereoscopic image data including left eye image data and right eye image data. The transmission mode for this stereoscopic data is, for example, the first transmission mode ("Top & Bottom" mode), the second transmission mode ("Side by Side" mode), the third transmission mode ("Frame Sequential" mode) described above, or the like (see Figs. 4(a) to 4(c)).

The graphics decoder 222 performs processing reverse to that of the graphics encoder 119 of the transmit data generating unit 110 described above. That is, the graphics decoder 222 reconstructs an elementary stream of graphics from the packets of graphics extracted by the demultiplexer 220, and performs a decoding process to obtain graphics data.

The text decoder 223 performs processing reverse to that of the text encoder 121 of the transmit data generating unit 110 described above. That is, the text decoder 223 reconstructs an elementary stream of text from the packets of text extracted by the demultiplexer 220, and performs a decoding process to obtain text data.

The audio decoder 224 performs processing reverse to that of the audio encoder 117 of the transmit data generating unit 110 described above. That is, the audio decoder 224 reconstructs an elementary stream of audio from the packets of audio extracted by the demultiplexer 220, and performs a decoding process to obtain audio data.

The view vector decoder 225 performs processing reverse to that of the view vector encoder 115 of the transmit data generating unit 110 described above. That is, the view vector decoder 225 reconstructs an elementary stream of view vector from the packets of view vector extracted by the demultiplexer 220, and performs a decoding process to obtain a view vector at a predetermined position within an image.

The stereoscopic-image graphics generating unit 226 generates left eye graphics information and right eye graphics information to be overlaid on the left eye imago and the right eye image, respectively, on the basis of the graphics data obtained by the decoder 222 and the view vector obtained by the decoder 225. In this case, while the left eye graphics information and the right eye graphics information are the same graphics information, their overlay positions within the images are such that, for example, with respect to the left eye graphics information, the right eye graphics information is shifted in the horizontal direction by the horizontal directional component of the view vector. Then, the stereoscopic-image graphics generating unit 226 outputs the data (bitmap data) of the generated left eye graphics information and right eye graphics information.

The stereoscopic-image text generating unit 227 generates left eye text information and right eye text information to be overlaid on the left eye image and the right eye image, respectively, on the basis of the text data obtained by the decoder 223 and the view vector obtained by the decoder 225. In this case, while the left eye text information and the right eye text information are the same text information, their overlay positions within the images are such that, for example, with respect to the left eye text information, the right eye text information is shifted in the horizontal direction by the horizontal directional component of the view vector. Then, the stereoscopic-image text generating unit 227 outputs the data (bitmap data) of the generated left eye text information and right eye text information.

The video overlay unit 228 overlays the data generated by the graphics generating unit 226, and the data generated by the text generating unit 227, on the stereoscopic image data (left eye image data and right eye image data) obtained by the video decoder 221, thereby obtaining stereoscopic image data for display Vout.

The multichannel speaker control unit 229 applies, for example, a process of generating the audio data of a multichannel speaker for realizing 5.1ch surround or the like, a process of giving predetermined sound field characteristics, or the like to the audio data obtained by the audio decoder 224. Also, the multichannel speaker control unit 229 controls the output of the multichannel speaker on the basis of the view vector obtained by the decoder 225.

A larger view vector provides a more pronounced stereo effect. By controlling the multichannel speaker output in accordance with the degree of stereo, provision of an enhanced stereoscopic experience can be realized.

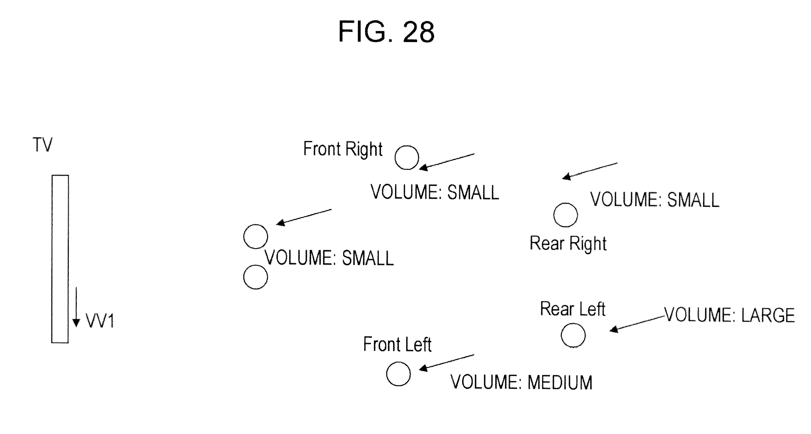

Fig. 28 illustrates an example of speaker output control in the case in which view vector VV1 is larger for video objects on the left side as viewed facing a television display. In this example of control, the Rear Left speaker volume of the multichannel speaker is set to large, the Front Left speaker volume is set to medium, and further the Front Right and Rear Right speaker volumes are set to small. In this way, by applying the view vector of video content (stereoscopic image data) to another media data such as audio data at the receiving side, it is possible to allow the viewer to experience a stereo effect in an overall sense.

Operation of the bit stream processing unit 201 illustrated in Fig. 27 will be briefly described. Bit stream data BSD outputted from the digital tuner 204 (see Fig. 26) is supplied to the demultiplexer 220. In the demultiplexer 220, TS packets of video, audio, view vector, graphics, and text are extracted from bit stream data BSD, and supplied to each decoder.

In the video decoder 221, an elementary stream of video is reconstructed from the packets of video extracted by the demultiplexer 220, and further, a decoding process is performed to obtain stereoscopic image data including left eye image data and right eye image data. This stereoscopic image data is supplied to the video overlay unit 228. Also, in the view vector decoder 225, an elementary stream of view vector is reconstructed from the packets of view vector extracted by the demultiplexer 220, and further, a decoding process is performed to obtain a view vector at a predetermined position within an image (see Fig. 8).

In the graphics decoder 222, an elementary stream of graphics is reconstructed from the packets of graphics extracted by the demultiplexer 220, and further, a decoding process is performed to obtain graphics data. This graphics data is supplied to the stereoscopic-image graphics generating unit 226. The view vector obtained by the view vector decoder 225 is also supplied to the stereoscopic-image graphics generating unit 226.

In the stereoscopic-image graphics generating unit 226, on the basis of the graphics data obtained by the decoder 222 and the view vector obtained by the decoder 225, left eye graphics information and right eye graphics information to be overlaid on the left eye image and the right eye image, respectively, are generated. In this case, while the left eye graphics information and the right eye graphics information are the same graphics information, their overlay positions within the images are such that, for example, with respect to the left eye graphics information, the right eye graphics information is shifted in the horizontal direction by the horizontal directional component of the view vector. The data (bitmap data) of the generated left eye graphics information and right eye graphics information is outputted from the stereoscopic-image graphics generating unit 226.

Also, in the text decoder 223, an elementary stream of text is reconstructed from the packets of text extracted by the demultiplexer 220, and further, a decoding process is performed to obtain text data. This text data is supplied to the stereoscopic-image text generating unit 227. The view vector obtained by the view vector decoder 225 is also supplied to the stereoscopic-image text generating unit 227.

In the stereoscopic-image text generating unit 227, on the basis of the text data obtained by the decoder 223 and the view vector obtained by the decoder 225, left eye text information and right eye text information to be overlaid on the left eye image and the right eye image, respectively, are generated. In this case, while the left eye text information and the right eye text information are the same text information, their overlay positions within the images are such that, for example, with respect to the left eye text information, the right eye text information is shifted in the horizontal direction by the horizontal directional component of the view vector. The data (bitmap data) of the generated left eye text information and right eye text information is outputted from the stereoscopic-image text generating unit 227.

In addition to the stereoscopic image data (left eye image data and right eye image data) from the video decoder 221 described above, data outputted from each of the graphics generating unit 226 and the text generating unit 227 is supplied to the video overlay unit 228. In the video overlay unit 228, the data generated in each of the graphics generating unit 226 and the text generating unit 227 is overlaid on the stereoscopic image data (left eye image data and right eye image data), thereby obtaining stereoscopic image data for display Vout. This stereoscopic image data for display Vout is supplied to the HDMI transmitting unit 206 (see Fig. 26) as transmit image data, via the video signal processing circuit 205.

Also, in the audio decoder 224, an elementary stream of audio is reconstructed from the packets of audio extracted by the demultiplexer 220, and further, a decoding process is performed to obtain audio data. This audio data is supplied to the multichannel speaker control unit 229. In the multichannel speaker control unit 229, for example, a process of generating the audio data of a multichannel speaker for realizing 5.1ch surround or the like, a process of giving predetermined sound field characteristics, or the like is applied to the audio data.

The view vector obtained by the view vector decoder 225 is also applied to the multichannel speaker control unit 229. Then, in the multichannel speaker control unit 229, the output of the multichannel speaker is controlled on the basis of the view vector, The multichannel audio data obtained by the multichannel speaker control unit 229 is supplied to the HDMI transmitting unit 206 (see Fig. 26) as transmit audio data, via the audio signal processing circuit 207.

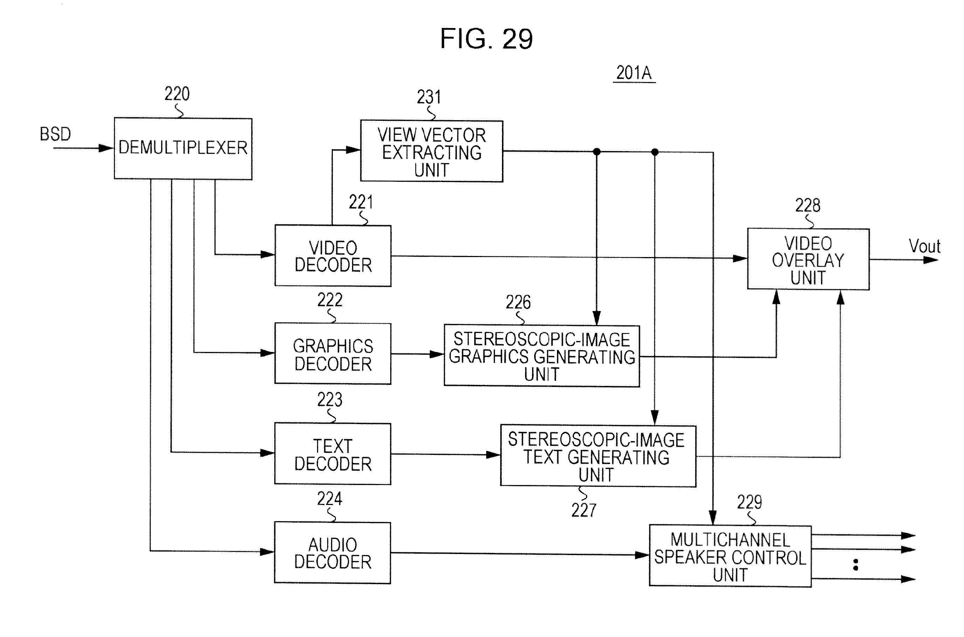

It should be noted that the bit stream processing unit 201 illustrated in Fig. 27 described above is configured in a manner corresponding to the transmit data generating unit 110 in Fig. 2 described above. A bit stream processing unit 201A illustrated in Fig. 29 is configured in a manner corresponding to the transmit data generating unit 110A in Fig. 13 described above. In Fig. 29, portions corresponding to those in Fig. 27 are denoted by the same symbols, and their detailed description is omitted.

In the bit stream processing unit 201A, a view vector extracting unit 231 is provided instead of the view vector decoder 225 of the bit stream processing unit 201 illustrated in Fig. 27. The view vector extracting unit 231 extracts, from a stream of video obtained via the video decoder 221, a view vector embedded in its user data. Then, the view vector extracting unit 231 supplies the extracted view vector to the stereoscopic-image graphics generating unit 206, the stereoscopic-image text generating unit 227, and the multichannel speaker control unit 229.

Although detailed description is omitted, the bit stream processing unit 201A illustrated in Fig. 29 is otherwise configured in the same manner as the bit stream processing unit 201 illustrated in Fig. 27.

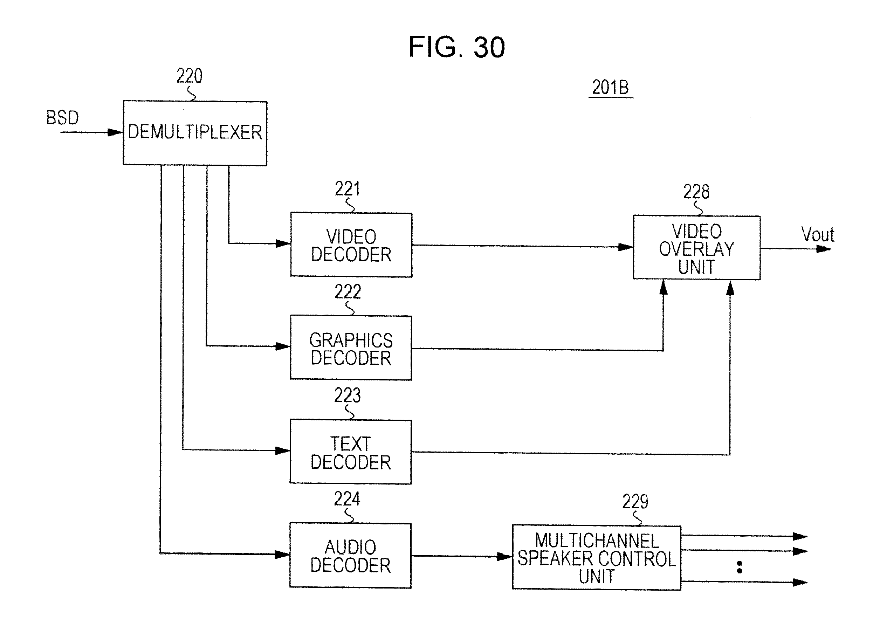

Also, a bit stream processing unit 201B illustrated in Fig. 30 is configured in a manner corresponding to the transmit data generating unit 110B in Fig. 18 described above. In Fig. 30, portions corresponding to those in Fig. 27 are denoted by the same symbols, and their detailed description is omitted.

In the bit stream processing unit 201B, the view vector decoder 225, the stereoscopic-image graphics generating unit 206, and the stereoscopic-image text generating unit 207 are removed from the bit stream processing unit 201 illustrated in Fig. 27. In this case, a view vector is transmitted while being included in the data of graphics information or text information. Also, as described above, the transmitted graphics data includes the data of left eye graphics information to be overlaid on the left eye image and the data of right eye graphics information to be overlaid on the right eye image. Likewise, as described above, the transmitted text data includes the data of left eye text information to be overlaid on the left eye image and the data of right eye text information to be overlaid on the right eye image. Therefore, the view vector decoder 225, the stereoscopic-image graphics generating unit 206, and the stereoscopic-image text generating unit 207 become unnecessary.

It should be noted that since the text data obtained by the text decoder 223 is code data, a process of converting this into bitmap data is necessary. This process is performed, for example, at the last stage of the text decoder 223, or performed at the input stage of the video overlay unit 228.

### [Description of Television Receiver]

Returning to Fig. 1, the television receiver 300 receives stereoscopic image data sent from the set top box 200 via the HDMI cable 400. The television receiver 300 has a 3D signal processing unit 301. The 3D signal processing unit 301 performs processing (decode process) corresponding to the transmission mode on the stereoscopic image data, and generates left eye image data and right eye image data. That is, the 3D signal processing unit 301 acquires the left eye image data and the right eye image data that constitute the stereoscopic image data by performing processing reverse to that of the video framing unit 112 in the transmit data generating unit 110, 110A, 110B illustrated in Fig. 2, 13, 18.

### [Example of Configuration of Television Receiver]

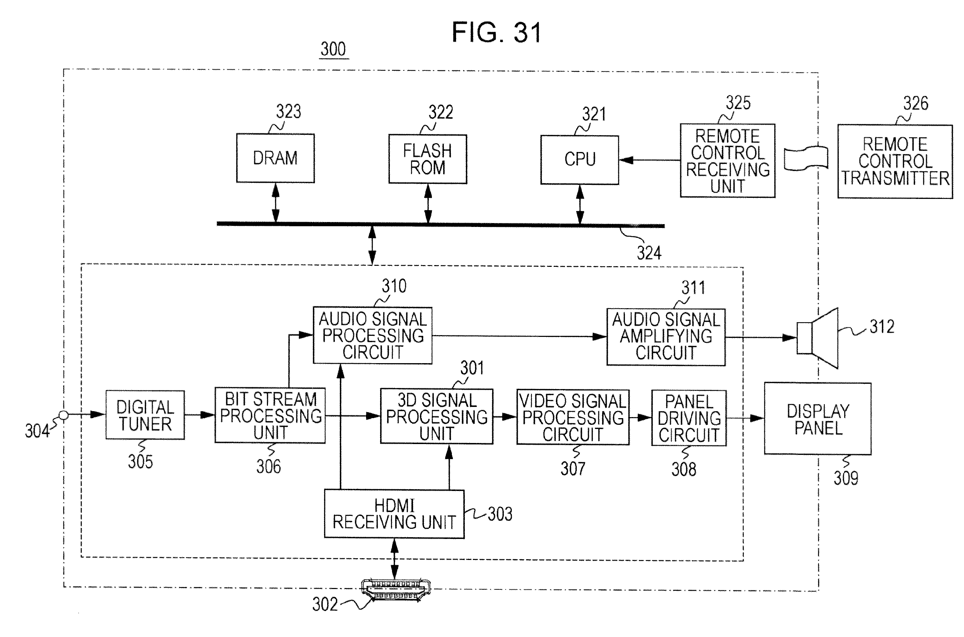

An example of the configuration of the television receiver 300 will be described, Fig. 31 illustrates an example of the configuration of the television receiver 300, The television receiver 300 has the 3D signal processing unit 301, the HDMI terminal 302, an HDMI receiving unit 303, an antenna terminal 304, a digital tuner 305, and a bit stream processing unit 306. Also, the television receiver 300 has a video signal processing circuit 307, a panel driving circuit 308, a display panel 309, an audio signal processing circuit 310, an audio signal amplifying circuit 311, and a speaker 312. Also, the television receiver 300 has a CPU 321, a flash ROM 322, a DRAM 323, an internal bus 324, a remote control receiving unit 325, and a remote control transmitter 326.

The antenna terminal 304 is a terminal to which a television broadcast signal received by a receive antenna (not illustrated) is inputted. The digital tuner 305 processes the television broadcast signal inputted to the antenna terminal 304, and outputs predetermined bit stream data (transport stream) corresponding to a user-selected channel.

The bit stream processing unit 306 is configured in the same manner as the bit stream processing unit 201 of the set top box 200 illustrated in Fig. 26. The bit stream processing unit 306 extracts stereoscopic image data (left eye image data and right eye image data), audio data, graphics data, text data, view vectors, and the like from bit stream data. Then, the bit stream data 306 synthesizes the data of overlay information (graphics information or text information) on the stereoscopic image data, and acquires stereoscopic image data for display. Also, the bit stream processing unit 306 outputs audio data.

The HDMI receiving unit 303 receives uncompressed image data (stereoscopic image data) and audio data supplied to the HDMI terminal 302 via the HDMI cable 400, through HDMI-compliant communication. Details of the HDMI receiving unit 303 will be described later. The 3D signal processing unit 301 performs processing (decode process) corresponding to the transmission mode, on the stereoscopic image data that is received by the HDMI receiving unit 303 or obtained by the bit stream processing unit 306, thereby generating left eye image data and right eye image data.

The video signal processing circuit 307 generates image data for displaying a stereoscopic image, on the basis of the left eye image data and the right eye image data generated by the 3D signal processing unit 301. Also, the video signal processing circuit performs an image quality adjustment process on the image data as required. The panel driving circuit 308 drives the display panel 309 on the basis of the image data outputted from the video signal processing circuit 307, The display panel 309 is formed by, for example, an LCD (Liquid Crystal Display), a PDP (Plasma DisplayPanel), or the like.

The audio signal processing circuit 310 performs necessary processing such as D/A conversion on the audio data that is received by the HDMI receiving unit 303 or obtained by the bit stream processing unit 306. The audio amplifying circuit 311 amplifies the audio signal outputted from the audio signal processing circuit 310 and supplies the audio signal to the speaker 312.

The CPU 321 controls the operation of each unit of the television receiver 300. The flash ROM 322 performs storage of control software and saving of data. The DRAM 323 constitutes a work area for the CPU 321. The CPU 321 expands software and data read from the flash ROM 322 onto the DRAM 323 to activate the software, thereby controlling each unit of the television receiver 300.

The remote control receiving unit 325 receives a remote control signal (remote control code) supplied from the remote control transmitter 326, and supplies the remote control signal to the CPU 321. The CPU 321 controls each unit of the television receiver 300 on the basis of this remote control code. The CPU 321, the flash ROM 322, and the DRAM 323 are connected to the internal bus 324.

Operation of the television receiver 300 illustrated in Fig. 31 will be briefly described. In the HDMI receiving unit 303, stereoscopic image data and audio data, which are transmitted from the set top box 200 connected to the HDMI terminal 302 via the HDMI cable 400, are received. The stereoscopic image data received by the HDMI receiving unit 303 is supplied to the 3D signal processing unit 301. Also, the audio data received by the HDMI receiving unit 303 is supplied to the audio signal processing circuit 310.

The television broadcast signal inputted to the antenna terminal 304 is supplied to the digital tuner 305. In the digital tuner 305, the television broadcast signal is processed, and predetermined bit stream data (transport stream) corresponding to a user-selected channel is outputted.

The bit stream data outputted from the digital tuner 305 is supplied to the bit stream processing unit 306. In the bit stream processing unit 306, stereoscopic image data (left eye image data and right eye image data), audio data, graphics data, text data, view vectors, and the like are extracted from the bit stream data. Also, in the bit stream processing unit 306, the data of overlay information (graphics information or text information) is synthesized with the stereoscopic image data, and stereoscopic image data for display is generated.

The stereoscopic image data for display generated by the bit stream processing unit 306 is supplied to the 3D signal processing unit 301. Also, the audio data obtained by the bit stream processing unit 306 is supplied to the audio signal processing circuit 310.

In the 3D signal processing unit 301, processing (decode process) corresponding to the transmission mode is performed on the stereoscopic image data that is received by the HDMI receiving unit 303 or obtained by the bit stream processing unit 306, and left eye image data and right eye image data are generated. The left eye image data and the right eye image data are supplied to the video signal processing unit circuit 307. In the video signal processing circuit 307, on the basis of the left eye image data and the right eye image data, image data for displaying a stereoscopic image is generated. Consequently, a stereoscopic image is displayed by the display panel 309.

Also, in the audio signal processing circuit 310, necessary processing such as D/A conversion is applied to the audio data that is received by the HDMI receiving unit 303 or obtained by the bit stream processing unit 306. This audio data is supplied to the speaker 312 after being amplified in the audio amplifying circuit 311. Consequently, audio is outputted from the speaker 312.

### [Example of Configuration of HDMI Transmitting Unit and HDMI Receiving Unit]

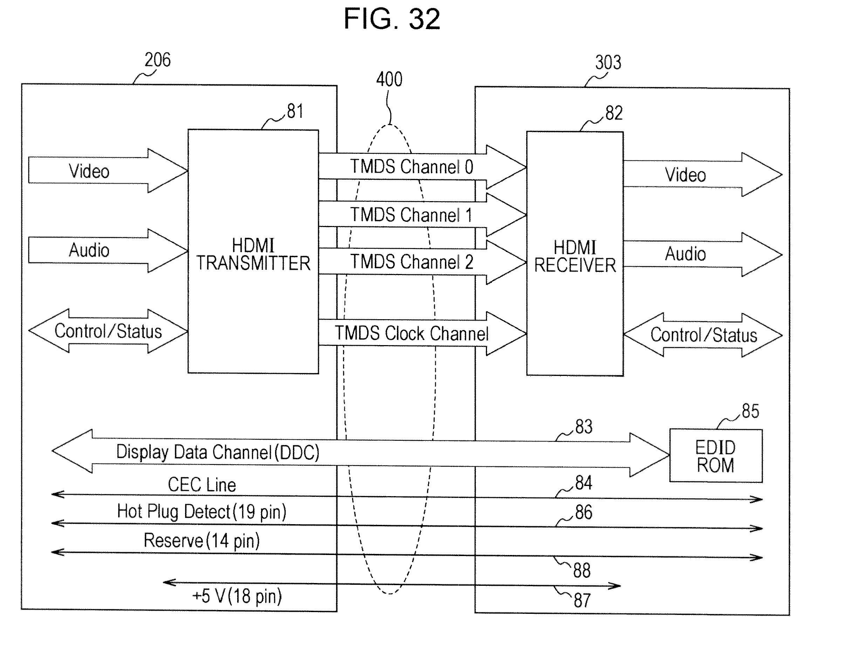

Fig. 32 illustrates an example of the configuration of the HDMI transmitting unit (HDMI source) 206 of the set top box 200, and the HDMI receiving unit (HDMI sink) 303 of the television receiver 300, in the stereoscopic image display system 10 in Fag. 1.

The HDMI transmitting unit 206 unidirectionally transmits differential signals corresponding to uncompressed pixel of one screen's worth of image to the HDMI receiving unit 303 on a plurality of channels during an active image period (hereafter, also referred to as Active Video period as appropriate). Here, the active image period is a period from one vertical sync signal to the next vertical sync signal, minus a horizontal blanking period and a vertical blanking period. Also, the HDMI transmitting unit 206 unidirectionally transmits differential signals corresponding to at least audio data and control data accompanying the image, other auxiliary data, and the like to the HDMI receiving unit 303 on a plurality of channels during the horizontal blanking period or the vertical blanking period.

The following transmission channels exist as transmission channels for an HDMI system including the HDMI transmitting unit 206 and the HDMI receiving unit 303. That is, there are three TMDS channels #0 to #2 as transmission channels for unidirectionally transmitting pixel data and audio data from the HDMI transmitting unit 206 to the HDMI receiving unit 303 in synchronization with a pixel clock. Also, there is a TMDS clock channel as a transmission channel for transmitting the pixel clock.

The HDMI transmitting unit 206 has the HDMI transmitter 81. The transmitter 81 converts uncompressed pixel data of an image into corresponding differential signals, for example, and unidirectionally transmits the differential signals serially to the HDMI receiving unit 303 connected via the HDMI cable 400, on a plurality of channels that are the three TMDS channels #0, #1, and #2.

Also, the transmitter 81 converts uncompressed audio data accompanying an image, and further, necessary control data, other auxiliary data, and the like into corresponding differential signals, and unidirectionally transmits the differential signals serially to the HDMI receiving unit 303, on the three TMDS channels #0, #1, and #2.

Further, the transmitter 81 transmits a pixel clock synchronized with pixel data transmitted on the three TMDS channels #0, #1, and #2, to the HDMI receiving unit 303 connected via the HDMI cable 400, on a TMDS clock channel. Here, on a single TMDS channel #i (i=0, 1, 2), 10-bit pixel data is transmitted during one clock cycle of the pixel clock.

During an Active Video period, the HDMI receiving unit 303 receives differential signals corresponding to pixel data unidirectionally transmitted from the HDMI transmitting unit 206 on a plurality of channels. Also, during a horizontal blanking period or a vertical blanking period, the HDMI receiving unit 303 receives differential signals corresponding to audio data and control data unidirectionally transmitted from the HDMI transmitting unit 206 on a plurality of channels.

That is, the HDMI receiving unit 303 has the HDMI receiver 82. The HDMI receiver 82 receives differential signals corresponding to pixel data and differential signals corresponding to audio data and control data, which are unidirectionally transmitted from the HDMI transmitting unit 206, on the TMDS channels #0, #1, and #2. In this case, the differential signals are received in synchronization with a pixel clock that is transmitted from the HDMI transmitting unit 206 on the TMDS clock channel.

In addition to the above-described TMDS channels #0 through #2 and the TMDS clock channel, transmission channels in the HDMI system including the HDMI transmitting unit 206 and the HDMI receiving unit 303 include transmission channels called a DDC (Display Data Channel) 83 and a CEC (Consumer Electronics Control) line 84. The DDC 83 is formed by two unillustrated signal lines included in the HDMI cable 400, and is used for the HDMI transmitting unit 206 to read E-EDID (Enhanced Extended Display Identification Data) from the HDMI receiving unit 303 that is connected via the HDMI cable 400.

That is, in addition to the HDMI receiver 81, the HDMI receiving unit 303 has an EDID ROM (Read Only Memory) 85 that stores E-EDID, which is performance information related to the performance (Configuration/capability) of the HDMI receiving unit 303 itself. The HDMI transmitting unit 206 reads, via the DDC 83, the E-EDID of the HDMI receiving unit 303 from the HDMI receiving unit 303 connected via the HDMI cable 400, in response to a request from the CPU 211 (see Fig. 26), for example. The HDMI transmitting unit 206 sends the read E-EDID to the CPU 211. The CPU 211 stores this E-EDID onto the flash ROM 212 or the DRAM 213.

The CPU 211 can recognize the performance settings of the HDMI receiving unit 303 on the basis of this E-EDID. For example, the CPU 211 recognizes the format of image data (resolution, frame rate, aspect, and so on) that can be supported by the television receiver 300 having the HDMI receiving unit 303.

The CEC line 84 is formed by an unillustrated single signal line included in the HDMI cable 400, and is used for performing bidirectional communication of control data between the HDMI transmitting unit 206 and the HDMI receiving unit 303. The CEC line 84 constitutes a control data line.

Also, the HDMI cable 400 includes a line (HPD line) 86 that is connected to a pin called HPD (Hot Plug Detect). By using the line 86, a source device can detect the connection of a sink device. Also, the HDMI cable 400 includes a line 87 (power line) that is used to supply power from the source device to the sink device. Further, the HDMI cable 400 includes a reserved line 88.

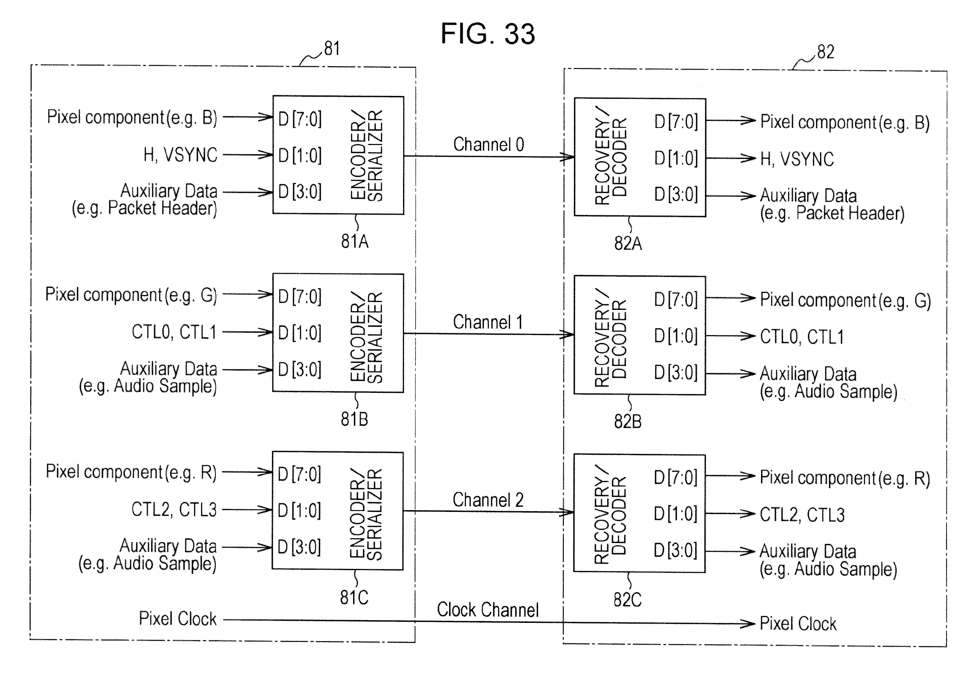

Fig. 33 illustrates an example of the configuration of the HDMI transmitter 81 and the HDMI receiver 82 in Fig. 32. The HDMI transmitter 81 has three encoders/serializers 81A, 81B, and 81C corresponding to the three TMDS channels #0, #1, and #2, respectively. Further, each of the three encoders/serializers 81A, 81B, and 81C encodes image data, auxiliary data, and control data supplied thereto to perform conversion from parallel data to serial data, and transmits the serial data by differential signals. Here, if the image data has three components, R (Red), G (Green), and B (Blue), for example, the B component is supplied to the encoder/serializer 81A, the G component is supplied to the encader/serializer 81B, and the R component is supplied to the encoder/serializer 81C.

Also, the auxiliary data includes, for example, audio data and control packets. For example, the control packets are supplied to the encoder/serializer 81A, and the audio data is supplied to the encoders/serializers 81B and 81C. Further, the control data includes a 1-bit vertical sync signal (VSYNC), a 1-bit horizontal sync signal (HSYNC), and control bits CTL0, CTL1, CTL2, and CTL3 each having 1 bit. The vertical sync signal and the horizontal sync signal are supplied to the encoder/serializer 81A. The control bits CTL0 and CTL1 are supplied to the encoder/serializer 81B, and the control bits CTL2 and CTL3 are supplied to the encoder/serializer 81C.

The encoder/serializer 81A transmits the B component of image data, a vertical sync signal and a horizontal sync signal, and auxiliary data which are supplied thereto, in a time division manner. That is, the encoder/serializer 81A converts the B component of image data supplied thereto into parallel data in units of 8 bits as a fixed number of bits. Further, the encoder/serializer 81A encodes and converts the parallel data into serial data, and transmits the serial data an the TMDS channel #0.

Also, the encoder/serializer 81A encodes and converts 2-bit parallel data of a vertical sync signal and a horizontal sync signal supplied thereto into serial data, and transmits the serial data on the TMDS channels #0. Further, the encoder/serializer 81A converts auxiliary data supplied thereto into parallel data in units of 4 bits. Then, the encoder/serializer 81A encodes and converts the parallel data into serial data, and transmits the serial data on the TMDS channel #0.

The encoder/serializer 81B transmits the G component of image data, control bits CTL0 and CTL1, and auxiliary data which are supplied thereto, in a time division manner. That is, the encoder/serializer 81B converts the G component of image data supplied thereto into parallel data in units of 8 bits as a fixed number of bits. Further, the encoder/serializer 81B encodes and converts the parallel data into serial data, and transmits the serial data on the TMDS channel #1.

Also, the encoder/serializer 81B encodes and converts 2-bit parallel data of control bits CTL0 and CTL1 supplied thereto into serial data, and transmits the serial data on the TMDS channel #1. Further, the encoder/serializer 81B converts the auxiliary data supplied thereto into parallel data in units of 4 bits. Then, the encoder/serializer 81B encodes and converts the parallel data into serial data, and transmits the serial data on the TMDS channel #1.

The encoder/serializer 81C transmits the R component of image data, control bits CTL2 and CTL3, and auxiliary data which are supplied thereto, in a time division manner. That is, the encoder/serializer 81C converts the R component of image data supplied thereto into parallel data in units of 8 bits as a fixed number of bits. Further, the encoder/serializer 81C encodes and converts the parallel data into serial data, and transmits the serial data on the TMDS channel #2.

Also, the encoder/serializer 81C encodes and converts 2-bit parallel data of control bits CTL2 and CTL3 supplied thereto into serial data, and transmits the serial data on the TMDS channel #2. Further, the encoder/serializer 81C converts the auxiliary data supplied thereto into parallel data in units of 4 bits. Then, the encoder/serializer 81C encodes and converts the parallel data into serial data, and transmits the serial data on the TMDS channel #2.

The HDMI receiver 82 has three recoveries/decoders 82A, 82B, and 82C corresponding to the three TMDS channel #0, #1, and #2, respectively. Each of the recoveries/decoders 82A, 82B, and 82C receives image data, auxiliary data, and control data transmitted by differential signals on the TMDS channels #0, #1, and #2. Further, each of the recoveries/decoders 82A, 82B, and 82C converts the received image data, auxiliary data, and control data from serial data into parallel data, and decodes and outputs the parallel data.

That is, the recovery/decoder 82A receives the B component of image data, a vertical sync signal, a horizontal sync signal, and auxiliary data which are transmitted by differential signals on the TMDS channel #0. Then, the recovery/decoder 82A converts the B component of the image data, the vertical sync signal, the horizontal sync signal, and the auxiliary data from serial data into parallel data, and decodes and outputs the parallel data.

The recovery/decoder 82B receives the G component of the image data, control bits CTL0 and CTL1, and auxiliary data which are transmitted by differential signals on the TMDS channel #1. Then, the recovery/decoder 82B converts the G component of image data, the control bits CTL0 and CTL1, and the auxiliary data from serial data into parallel data, and decodes and outputs the parallel data.

The recovery/decoder 82C receives the R component of image data, control bits CTL2 and CTL3, and auxiliary data which are transmitted by differential signals on the TMDS channel #2. Then, the recovery/decoder 82C converts the R component of the image data, the control bits CTL2 and CTL3, and the auxiliary data from serial data into parallel data, and decodes and outputs the parallel data.

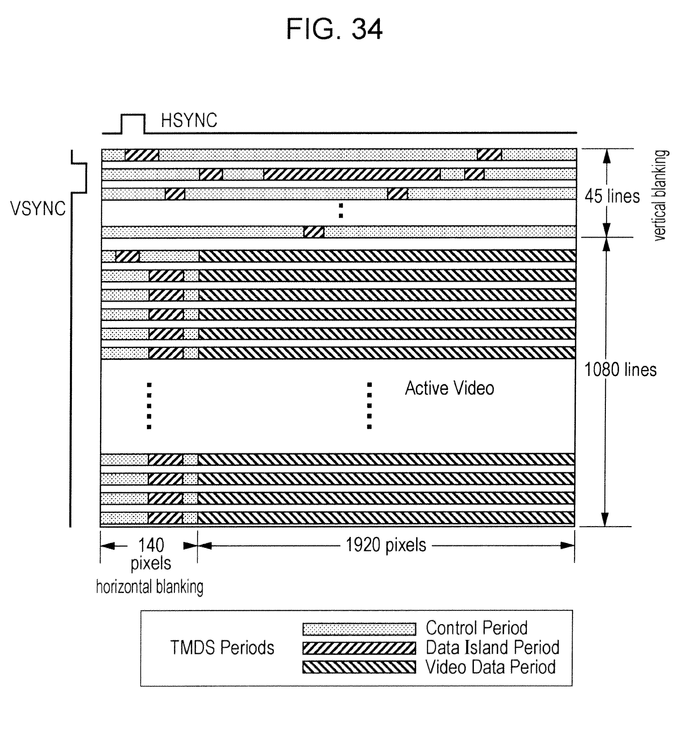

Fig. 34 illustrates an example of the structure of TMDS transmission data. Fig. 34 illustrates various periods of transmission data in the case in which image data whose horizontal × vertical is 1920 pixels × 1080 lines is transmitted on the three TMDS channels #0, #1, and #2.

During a Video Field in which transmission data is transmitted on the three TMDS channels #0, #1, and #2 of HDMI, three kinds of periods, a Video Data period, a Data Islandperiod, and a Control period exist depending on the kind of transmission data.

Here, the Video Field period is the period from the rising edge (active edge) of a given vertical sync signal to the rising edge of the next vertical sync signal, and is divided into horizontal blanking, vertical blanking, and Active Video. This Active Video is the period of the Video Field period minus the horizontal blanking and the vertical blanking.

The Video Data period is assigned to the Active Video period. In this Video Data period, data of 1920 pixels × 1080 lines of active pixels constituting one screen's worth of uncompressed image data is transmitted.

The Data Island period and the Control period are assigned to horizontal blanking and vertical blanking. In this Data Island period and Control period, auxiliary data is transmitted. That is, a Data Island period is assigned to a portion of each of horizontal blanking and vertical blanking. In this Data Island period, of the auxiliary data, data not related to control, for example, an audio data packet and the like, is transmitted.

The Control period is assigned to the other portion of each of horizontal blanking and vertical blanking. In this Control period, of the auxiliary data, data related to control, for example, a vertical sync signal, a horizontal sync signal, a control packet, and the like, is transmitted.

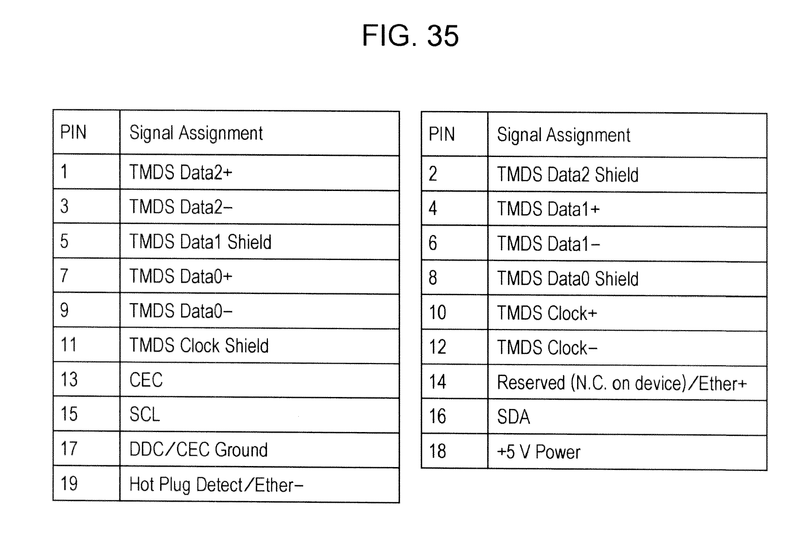

Fig. 35 illustrates an example of pin arrangement of the HDMI terminals 211 and 251. The pin arrangement illustrated in Fig. 35 is called type-A.

Two lines as differential lines along which TMDS Data #i+ and TMDS Data #i- as differential signals on TMDS channel #i are transmitted are connected to pins (pins whose pin numbers are 1, 4, and 7) to which TMDS Data #i+ is assigned, and pins (pins whose pin numbers are 3, 6, and 9) to which TMDS Data #i- is assigned.

Also, the CEC line 84 along which a CEC signal as control data is transmitted is connected to a pin whose pin number is 13. A pin whose pin number is 14 is a reserved pin. Also, a line along which an SDA (SerialData) signal such as E-EDID is transmitted is connected to a pin whose pin number is 16. A line along which an SCL (Serial Clock) signal as a clock signal used for synchronization at the time of transmission and reception of an SDA signal is transmitted is connected to a pin whose pin number is 15. The above-mentioned DDC 83 is formed by the line along which an SDA signal is transmitted and the line along which an SCL signal is transmitted.

Also, the HPD line 86 for a source device to detect the connection of a sink device as described above is connected to a pin whose pin number is 19. Also, the line 87 for supplying power as described above is connected to a pin whose pin number is 18.

### [Example of TMDS Transmission Data in Each Mode for Stereoscopic Image Data]

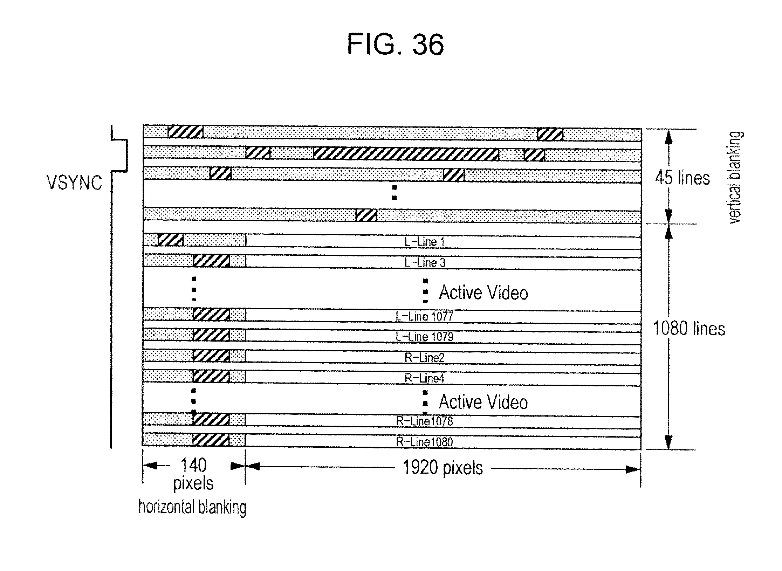

Here, an example of TMDS transmission data in each mode for stereoscopic image data will be described. Fig. 36 illustrates an example of TMDS transmission data in the first transmission mode ("Top & Bottom" mode). In this case, the data of 1920 pixels × 1080 lines of active pixels (synthesized data of left eye (L) image data and right eye (R) image data) is placed in the Active Video period of 1920 pixels × 1080 lines. In the case of this first mode, as described above, the lines in the vertical direction of each of left eye image data and right eye image data are thinned to 1/2. Here, the left eye image data to be transmitted is either odd-numbered lines or even-numbered lines and, likewise, the right eye image data to be transmitted is either odd-numbered lines or even-numbered lines.

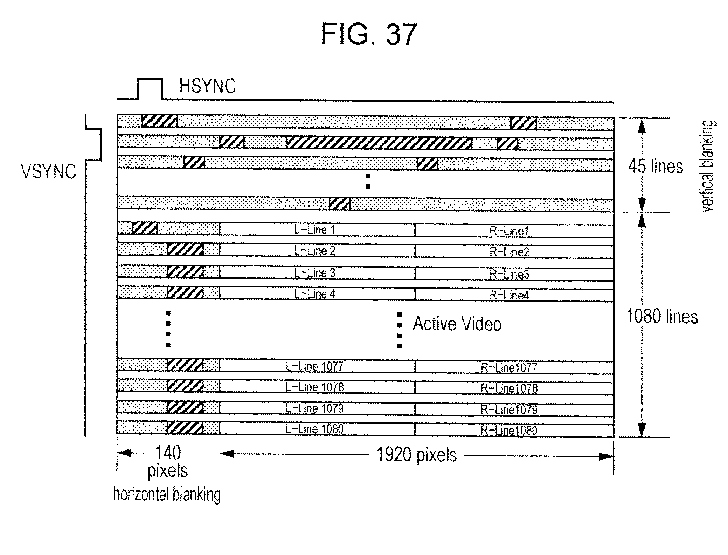

Fig. 37 illustrates an example of TMDS transmission data in the second transmission mode ("Side by Side" mode). In this case, the data of 1920 pixels × 1080 lines of active pixels (synthesized data of left eye (L) image data and right eye (R) image data) is placed in the Active Video period of 1920 pixels × 1080 lines. In the case of this second mode, as described above, the lines in the horizontal direction of each of left eye image data and right eye image data are thinned to 1/2.

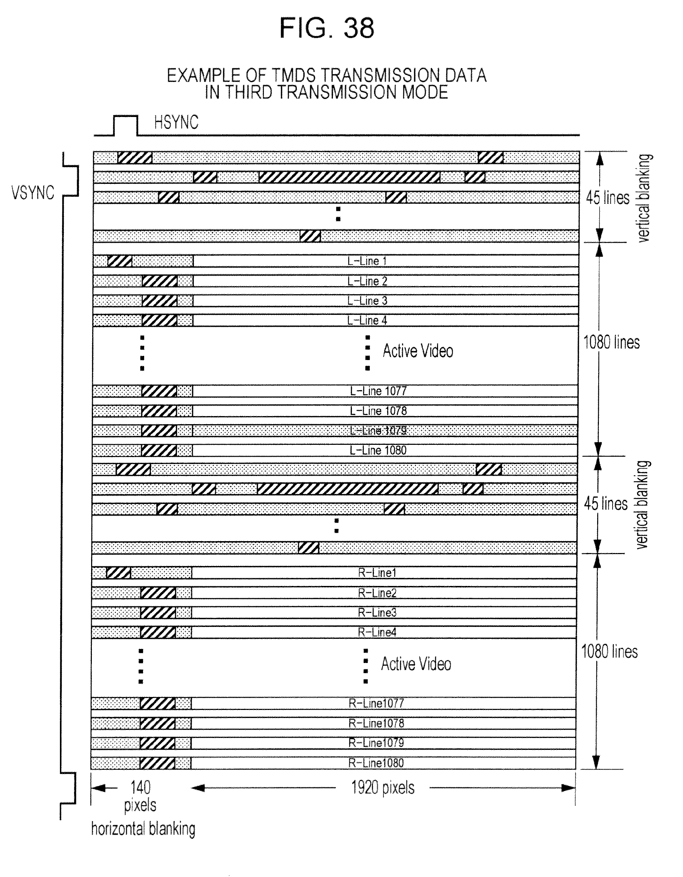

Fig. 38 illustrates an example of TMDS transmission data in the third transmission mode ("Frame Sequential" mode). In this case, the left eye (L) image data of 1920 pixels × 1080 lines of active pixels is placed in the odd-numbered fields of the Active Video period of 1920 pixels × 1080 lines. Also, the right eye (R) image data of 1920 pixels × 1080 lines of active pixels is placed in the even-numbered fields of the Active Video period of 1920 pixels × 1080 lines.

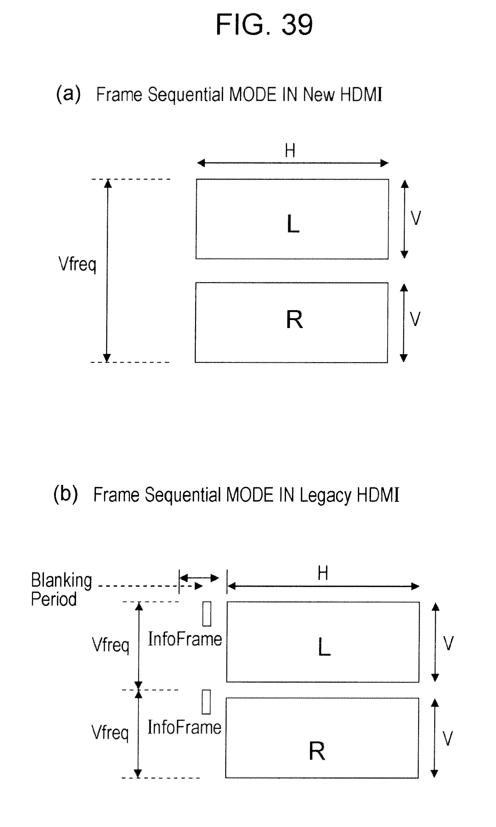

It should be noted that the example of TMDS transmission data in the "Frame Sequential" mode illustrated in Fig. 38 illustrates the "Frame Sequential" mode in HDMI 1.4 (New HDMI). In this case, as illustrated in Fig. 39(a), in each frame period Vfreq, left eye image data is placed in odd-numbered fields, and right eye image data is placed in even-numbered fields.

However, in the case of the "FrameSequential" mode in HDMI 1.3 (Legacy HDMI), as illustrated in Fig. 39(b), left eye image data and right eye image data are transmitted alternately for every frame period Vfreq. In this case, it is necessary for a source device to send to a sink device information indicating whether the image data being transmitted is left eye image data or right eye image data for every frame (L, R signaling information).

When transmitting stereoscopic image data in the "Top & Bottom" mode, the "Side By Side" mode, or the "Frame Sequential" mode to the sink device, the mode is specified on the source device side, and further, in the case of the "Frame Sequential" mode, signaling of L, R is performed for every frame.

For example, the following syntax is transmitted by newly defining one of Vendor Specific, AVI InfoFrame, and Reserved defined in the blanking of the Legacy HDMI specification.

In the case of HDMI 1.3, the followings are defined as information to be sent in the blanking period.

```
 InfoFrame Type # (8bits)
 ---------------------
 0×01: Vendor Specific
 0×02: AVI InfoFrame
 0×03: Source Product Description
 0×04: Audio InfoFrame
 0×05: MPEGSource
 0×06 -0×FF Reserved
```

Of these, one of the Vendor Specific, AVI InfoFrame, and Reserved areas is newly defined as follows.

```
 3DVideoFlag 1bit (0: 2D, 1: 3D)
 if(3DVideoFlag) {
      3DVideoFormat 3bits (0×0: Frame Packing Left View
             0×1: Frame Packing Right View
             0×2: Side by Side
             0×4: Top & Bottom by Frame
             0×6: Top & Bottom by Field
             0×3, 5, 7: Reserved)
      Reserved 4bits (0×0)
 }
 else {
        Reserved 7bits (0×0)
 }
```

The above-described information includes information on switching between three-dimensional image data and two-dimensional image data. (1 bit of 3DVideoFlag information), and information on the specification of the format of three-dimensional image data or switching between left eye image data and right eye image data (3 bits of 3DVideoFormat information).

It should be noted that this information is to be defined in the picture header or auxiliary information sent at the equivalent timing, in the bit stream on which the same information is broadcast. In this case, three-dimensional image data (stereoscopic image data including left eye image data and right eye image data) or two-dimensional image data is alternatively included in this bit stream.
In the receiver (set top box 200), upon receiving the stream, this signaling information is sent to a digital interface at a subsequent stage to ensure that accurate 3D conversion can be done on the display (television receiver 300).

Also, when the information on switching (1 bit of 3DVideoFlag information) indicates three-dimensional image data, that is, when the data stream includes three-dimensional image data, the receiver may download and install software for processing this three-dimensional image data from an external device such as a broadcasting server.

For example, to transmit the 3D information described above, additional support on a system that supports HDMI 1.3, or updating of the software of a system that supports HDMI 1.4 becomes necessary. Therefore, when updating software, updates are made to, for example, software related to firmware or middleware necessary for transmission of the 3D information described above.

As described above, in the stereoscopic image display system 10 illustrated in Fig. 1, on the basis of disparity information of one of the left eye image and the right eye imago with respect to the other, a disparity is given to the same overlay information (graphics information or text information) to be overlaid on the left eye image and the right eye image. Therefore, as the same overlay information to be overlaid on the left eye image and the right eye image, overlay information to which disparity adjustment has been applied in accordance with the perspective of each object within the image can be used, thereby making it possible to maintain consistency of perspective with each object within the image in the display of the overlay information.

### <2. Modifications>

It should be noted that in the above-described embodiment, the view vector at a predetermined position within an image is transmitted from the broadcasting station 100 side to the set top box 200. In this case, the set top box 200 is not required to obtain the view vector on the basis of left eye image data and right eye image data included in stereoscopic image data that has been received, and thus processing in the set top box 200 is simplified.

However, it is also conceivable to place a view vector detecting unit equivalent to the view vector detecting unit 114 in the transmit data generating unit 110 in Fig. 2, at the receiving side of the stereoscopic image data, which is the set top box 200 in the above-described embodiment. In this case, processing using a view vector becomes possible even if the view vector is not sent.

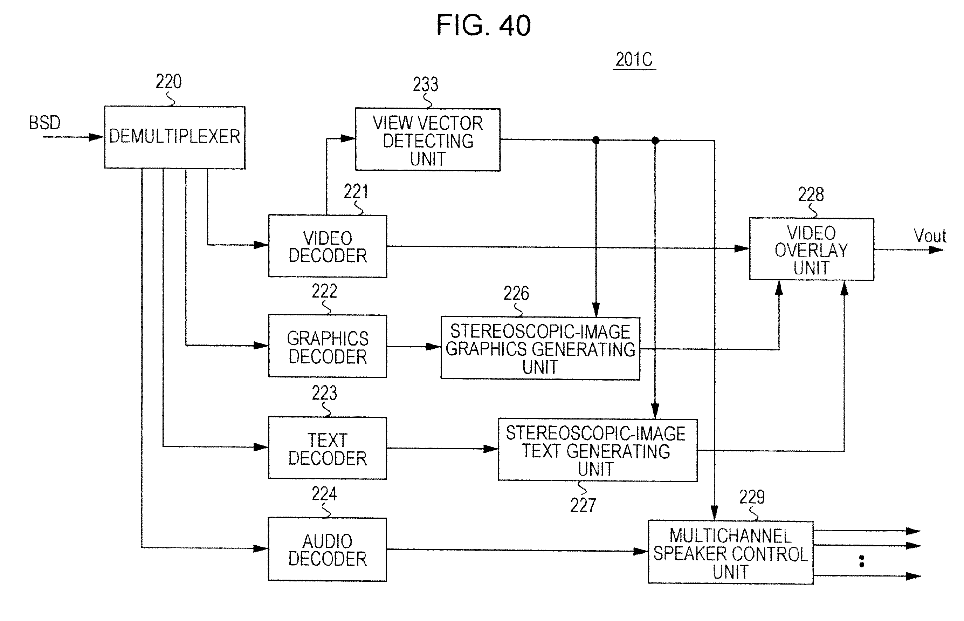

Fig. 40 illustrates an example of the configuration of a bit stream processing unit 201C provided in the set top box 200, for example. In Fig. 40, portions corresponding to those in Fig. 27 are denoted by the same symbols, and their detailed description is omitted. In the bit stream processing unit 201C, a view vector detecting unit 233 is placed instead of the view vector decoder 225 in the bit stream processing unit 201 illustrated in Fig. 27.

The view vector detecting unit 233 detects the view vector at a predetermined position within an image, on the basis of left eye image data and right eye image data that constitute stereoscopic image data obtained by the video decodes 221. Then, the view vector detecting unit 233 supplies the detected view vector to the stereoscopic-image graphics generating unit 206, the stereoscopic-image text generating unit 227, and the multichannel speaker output control unit 229.

Although detailed description is omitted, the bit stream processing unit 201C illustrated in Fig. 40 is otherwise configured in the same manner as the bit stream processing unit 201 illustrated in Fig. 27.

Also, the above-described embodiment is directed to the case in which the stereoscopic image display system 10 is formed by the broadcasting station 100, the set top box 200, and the television receiver 300. However, as illustrated in Fig. 31, the television receiver 300 includes the bit stream processing unit 201 that functions in a manner equivalent to the bit stream processing unit 201 within the set top box 200. Therefore, as illustrated in Fig. 41, a stereoscopic image display system 10A formed by the broadcasting station 100 and the television receiver 300 is also conceivable.

Also, the above-described embodiment is directed to the case in which a data stream (bit stream data) including stereoscopic image data is broadcast from the broadcasting station 100. However, of course, this invention can be similarly applied to a system configured so that this data stream is distributed to the receiving terminal by using a network such as the Internet.

### Industrial Applicability

This invention can be applied to a stereoscopic image display system or the like in which overlay information such as graphics information or text information is overlay-displayed on an image.

### Reference Signs List

- 10, 10A: stereoscopic image display system
- 100: broadcasting station
- 110, 110A, 110B: transmit data generating unit
- 111L, 111R: camera
- 112: video framing unit
- 113: video encoder
- 114: view vector detecting unit
- 115: view vector encoder
- 116: microphone
- 117: audio encoder
- 118: graphics generating unit
- 119: graphics encoder
- 120: text generating unit
- 121: text encoder
- 122: multiplexer
- 123: stream framing unit
- 124: graphics processing unit
- 125: text processing unit
- 200: set top box
- 201, 201A, 201B, 201C: bit stream processing unit
- 202: HDMI terminal
- 203: antenna terminal
- 204: digital tuner
- 205: video signal processing circuit
- 206: HDMI transmitting unit
- 207: audio signal processing circuit
- 211: CPU
- 212: flash ROM
- 213: DRAM
- 214: internal buts
- 215: remote control receiving unit
- 216: remote control transmitter
- 220: demultiplexer
- 221: video decoder
- 222: graphics decoder
- 223: text decoder
- 224: audio decoder
- 225: view vector decoder
- 226: stereoscopic-image graphics generating unit
- 227: stereoscopic-image text generating unit
- 228: video overlay unit
- 229: multichannel speaker control unit
- 231: view vector extracting unit
- 233: view vector detecting unit
- 300: television receiver
- 301: 3D signal processing unit
- 302: HDMI terminal
- 303: HDMI receiving unit
- 304: antenna terminal
- 305: digital tuner
- 306: bit stream processing unit
- 307: video signal processing circuit
- 308: panel driving circuit
- 309: display panel
- 310: audio signal processing circuit
- 311: audio amplifying circuit
- 312: speaker
- 321: CPU
- 322: flash ROM
- 323: DRAM
- 324: internal bus
- 325: remote control receiving unit
- 326: remote control transmitter
- 400: HDMI cable

## Claims

1. A stereoscopic image data transmitting apparatus, comprising:
a stereoscopic image data outputting unit that outputs stereoscopic image data including left eye image data and right eye image data;
a disparity information outputting unit that outputs disparity information for giving a disparity by shifting overlay information to be overlaid on images based on the left eye image data and the right eye image data; and
a data transmitting unit that transmits the disparity information outputted from the disparity information outputting unit, together with the stereoscopic image data outputted from the stereoscopic image data outputting unit.

2. The stereoscopic image data transmitting apparatus according to Claim 1, wherein the data transmitting unit transmits the disparity information as numeric information.

3. The stereoscopic image data transmitting apparatus according to Claim 1, wherein the data transmitting unit transmits the disparity information while including the disparity information in data of the overlay information to be overlaid on the images based on the left eye image data and the right eye image data.

4. A stereoscopic image data transmitting method, comprising:
acquiring disparity information for giving a disparity by shifting overlay information to be overlaid on images based on left eye image data and right eye image data; and
transmitting the acquired disparity information, together with stereoscopic image data including the left eye image data and the right eye image data.

5. A stereoscopic image data transmitting method, comprising:
acquiring, on the basis of left eye image data and right eye image data for displaying a stereoscopic image, disparity information of one of a left eye image and a right eye image with respect to the other, at a predetermined position within an image; and
transmitting the acquired disparity information, together with stereoscopic image data including the left eye image data and the right eye image data.

6. A stereoscopic image data receiving apparatus, comprising:
an image data receiving unit that receives stereoscopic image data including left eye image data and right eye image data; and
an image data processing unit that gives a disparity to the same overlay information to be overlaid on a left eye image and a right eye image, on the basis of disparity information of one of the left eye image and the right eye image with respect to the other, and obtains data of the left eye image on which the overlay information has been overlaid and data of the right eye image on which the overlay information has been overlaid, the disparity information being obtained by processing the left eye image data and the right eye image data included in the stereoscopic image data received by the image data receiving unit.

7. The stereoscopic image data receiving apparatus according to Claim 6, wherein the image data processing unit gives, to the same overlay information to be overlaid on the left eye image and the right eye image, the disparity according to an overlay position of the overlay information.

8. The stereoscopic image data receiving apparatus according to Claim 6, further comprising a disparity information receiving unit that receives the disparity information in synchronization with the stereoscopic image data received by the image data receiving unit.

9. The stereoscopic image data receiving apparatus according to Claim 6, further comprising a disparity information acquiring unit that obtains the disparity information of one of the left eye image and the right eye image to the other, at a predetermined position within an image, on the basis of the left eye image data and the right eye image data included in the stereoscopic image data received by the image data receiving unit.

10. The stereoscopic image data receiving apparatus according to Claim 6, further comprising an image data transmitting unit that transmits the stereoscopic image data including the left eye image data and the right eye image data obtained by the image data processing unit, to an external device.

11. The stereoscopic image data receiving apparatus according to Claim 10, wherein the image data transmitting unit transmits the left eye image data and the right eye image data to the external device in a frame sequential mode, and further transmits, to the external device, a signal for discriminating whether image data transmitted in each frame is the left eye image data or the right eye image data.

12. The stereoscopic image data receiving apparatus according to Claim 6, further comprising an image display unit that displays an image for stereoscopic image display based on the left eye image data and the right eye image data obtained by the image data processing unit.

13. The stereoscopic image data receiving apparatus according to Claim 6, further comprising:
a multichannel speaker; and
a control unit that controls an output of the multichannel speaker, on the basis of the disparity information of one of the left eye image data and the right eye image data with respect to the other.

14. A stereoscopic image data receiving method, comprising:
an image data receiving step of receiving stereoscopic image data including left eye image data and right eye image data; and
an image data processing step of giving a disparity to the same overlay information to be overlaid on a left eye image and a right eye image, on the basis of disparity information of one of the left eye image and the right eye image with respect to the other, and obtaining data of the left eye image on which the overlay information has been overlaid and data of the right eye image on which the overlay information has been overlaid.

15. An image data transmitting apparatus, comprising:
a data stream transmitting unit that transmits a data stream alternatively including three-dimensional image data or two-dimensional image data; and
an information embedding unit that embeds, into the data stream, information on switching between the three-dimensional image data and the two-dimensional image data, and information on specification of a format of the three-dimensional image data or switching between left eye image data and right eye image data.

16. An image data receiving apparatus, comprising:
a data stream receiving unit that receives a data stream alternatively including three-dimensional image data or two-dimensional image data, and including information on switching between the three-dimensional image data and the two-dimensional image data, and information on specification of a format of the three-dimensional image data or switching between left eye image data and right eye image data;
an image data transmitting unit that transmits image data included in the data stream received by the data receiving unit, to an external device via a digital interface; and
an information transmitting unit that transmits the information on switching between the three-dimensional image data and the two-dimensional image data, and the information on specification of a format of the three-dimensional image data or switching between left eye image data and right eye image data, which are included in the data stream, to the external device via the digital interface.

17. An image data receiving apparatus, comprising:
a data stream receiving unit that receives a data stream alternatively including three-dimensional image data or two-dimensional image data; and
a downloading unit that downloads software for processing the three-dimensional image data from an external device, when the data stream receiving unit receives the data stream including the three-dimensional image data.
